# FASCICULE DE BREVET EUROPEEN

(11) **EP 3 106 896 B1**
(45) Date de publication et mention de la délivrance du brevet: **22.07.2020**
(21) Numéro de dépôt: 16174380.2
(22) Date de dépôt: 14.06.2016
(51) Int. Cl.: G01S 19/02, G01S 19/03, G01S 19/08

(54) **SYSTÈME D'AUGMENTATION SPATIAL OU AÉRONAUTIQUE AVEC GESTION SIMPLIFIÉE DE SES MESSAGES DE NAVIGATION**
VERSTÄRKUNGSSYSTEM FÜR LUFT- ODER RAUMFAHRT MIT VEREINFACHTER VERWALTUNG DER NAVIGATIONSMELDUNGEN
SPACE BASED OR AERONAUTICAL AUGMENTATION SYSTEM WITH SIMPLIFIED MANAGEMENT OF ITS NAVIGATION MESSAGES

(30) Priorité: 17.06.2015 FR 1501261
(43) Date de publication de la demande: 21.12.2016
(73) Titulaire: THALES, 92400 Courbevoie (FR)
(72) Inventeur: CHAMBRE, Eric, 31100 Toulouse (FR); BENASSY FOCH, Céline, 31100 Toulouse (FR); CHARLOT, Bernard, 31100 Toulouse (FR)
(74) Mandataire: Tanguy, Yannick

(56) Documents cités:
- EP-A1- 1 494 042
- EP-A1- 2 579 062
- EP-A1- 2 693 232
- US-A1- 2013 273 955
- WESTBROOK J ET AL: "An Introduction to the EGNOS Central Processing Facility (CPF)", 56TH AM - PROCEEDINGS OF THE IAIN WORLD CONGRESS AND THE 56TH ANNUAL MEETING OF THE INSTITUTE OF NAVIGATION, THE INSTITUTE OF NAVIGATION, 8551 RIXLEW LANE SUITE 360 MANASSAS, VA 20109, USA, 28 juin 2000 (2000-06-28), pages 6-13, XP056001161,
- WESTBROOK J ET AL: "EGNOS Central Processing Facility architecture and design", GNSS 2000 CONFERENCE, EDINBURGH, SCOTLAND, UK, MAY 1-4, 2000, , 1 mai 2000 (2000-05-01), pages 1-18, XP002676599, Extrait de l'Internet: URL:http://www.egnos-pro.esa.int/Publicati ons/GNSS%202000/GNSS2000_cpf.pdf
- LACARRA E ET AL: "Description and Applications of EDAS (EGNOS Data Access Service)", GNSS 2013 - PROCEEDINGS OF THE 26TH INTERNATIONAL TECHNICAL MEETING OF THE SATELLITE DIVISION OF THE INSTITUTE OF NAVIGATION (ION GNSS+ 2013), THE INSTITUTE OF NAVIGATION, 8551 RIXLEW LANE SUITE 360 MANASSAS, VA 20109, USA, 20 septembre 2013 (2013-09-20), pages 2228-2242, XP056007426,

## Description

La présente invention concerne un système d'augmentation spatial ou aéronautique, adapté pour améliorer la précision et la fiabilité des données délivrées par un système de navigation par satellites, et simplifié pour la gestion de ses messages de navigation.

La présente invention concerne également de manière correspondante un procédé de gestion simplifié des messages de navigation du système d'augmentation spatial ou aéronautique selon l'invention.

Les systèmes d'augmentation spatiaux ou SBAS pour "Space Based Augmentation Systems" sont des systèmes de radionavigation par satellites destinés à compléter des systèmes assurant un service de base de navigation par satellite ou GNSS pour "Global Navigation Satellite Systems" tels les systèmes GPS, GALILEO, ou GLONASS pour fournir conjointement des performances supérieures en terme de précision de localisation, de disponibilité et continuité du service et d'intégrité des informations fournies.

Ces systèmes transmettent sur un ou plusieurs satellites (typiquement géostationnaires) un signal en bande L transportant notamment une suite de messages de navigation ou NOF pour "Navigation Overlay Frame" en langue anglaise, à raison d'un message par seconde.

Ce signal et la suite de messages transmis sont définis par un document normatif international RTCA MOPS DO-229-D, intitulé "Minimum Operational Performance Standards for Global Positionning System/Wide Area Augmentation equipment".

L'architecture de base connue d'un tel système d'augmentation spatial est décrite par exemple dans demande de brevet US 2013/273955 et dans la demande de brevet européen, publiée sous le numéro EP 2 579 062 A1.

Suivant l'architecture décrite dans le document EP 2 579 062 A1, un signal, émis par des satellites d'une constellation d'un système navigation par satellite GNSS, est reçu par un ensemble de stations de réception et d'observation au sol, ou RIMS pour "Ranging and Integrity Monitoring Station" en langue anglaise, dispersées sur un large territoire (par exemple l'Europe). Ces stations RIMS transmettent des signaux correspondant aux signaux reçus, à travers un réseau de longue distance ou WAN pour "Wide Area Network" en langue anglaise, à un centre de calcul ou CPF pour "Central Processing Facility" en langue anglaise. Ce centre de calcul élabore des corrections et des données d'intégrité permettant de fournir à l'usager les performances requises du service de navigation et en transmet à chaque cycle de calcul d'une durée d'une seconde une partie sous forme de messages numériques de navigation ou NOF pour "Navigation Overlay Frame" en langue anglaise qui sont transmis à travers le réseau longue distance à une station au sol de diffusion ou NLES pour "Navigation Land Earth Station" en langue anglaise. Cette station au sol de diffusion transmet des signaux correspondants aux signaux reçus, à des satellites géostationnaires qui les rediffusent via des signaux de diffusion vers des récepteurs d'usagers du service. Les récepteurs des usagers reçoivent simultanément les premiers signaux des satellites SBAS généralement géostationnaires et les deuxièmes signaux des satellites de la constellation du système de navigation par satellite GNSS, et calculent chacun leur position à l'aide de ces deux types de signaux. Il faut noter que les stations de réception et d'observation au sol RIMS reçoivent aussi ces signaux et qu'elles en transmettent les messages numériques de navigation NOF vers le centre de calcul CPF de façon conjointe aux informations reçues des satellites de la constellation GNSS.

Le cycle de calcul décrit ci-dessus est effectué par le système d'augmentation spatial SBAS de façon répétitive typiquement toutes les secondes.

L'implémentation est souvent faite en pipe line, chaque élément effectuant durant un cycle de calcul le traitement des données qui seront traitées par l'élément suivant lors du cycle suivant.

Il faut noter qu'au niveau de l'usager la connaissance d'une suite de flux de messages de navigation NOF d'une certaine longueur (typiquement plusieurs minutes) est nécessaire pour calculer son positionnement. La cohérence des différents flux de messages de navigation NOF émis successivement est donc un enjeu majeur : c'est pourquoi l'on parle de suite de messages de navigation NOF émis, et non de messages de navigation NOF isolés.

Une telle réalisation de base ne permet pas de fournir la disponibilité à très court terme et la continuité attendues par les utilisateurs d'un tel système : typiquement une disponibilité de l'ordre de 99 % et une probabilité de perte de continuité meilleure que 10⁻⁵/h sont caractéristiques des performances attendues pour l'usage actuellement le plus répandu qui est celui de l'aéronautique civile.

Notamment une panne du centre de calcul principal, c'est-à-dire du centre de calcul prévu pour fonctionner nominalement en mode maître, entraîne l'interruption des transmissions du flux de messages de navigation ou NOF et une perte immédiate de continuité avec un impact sur la disponibilité.

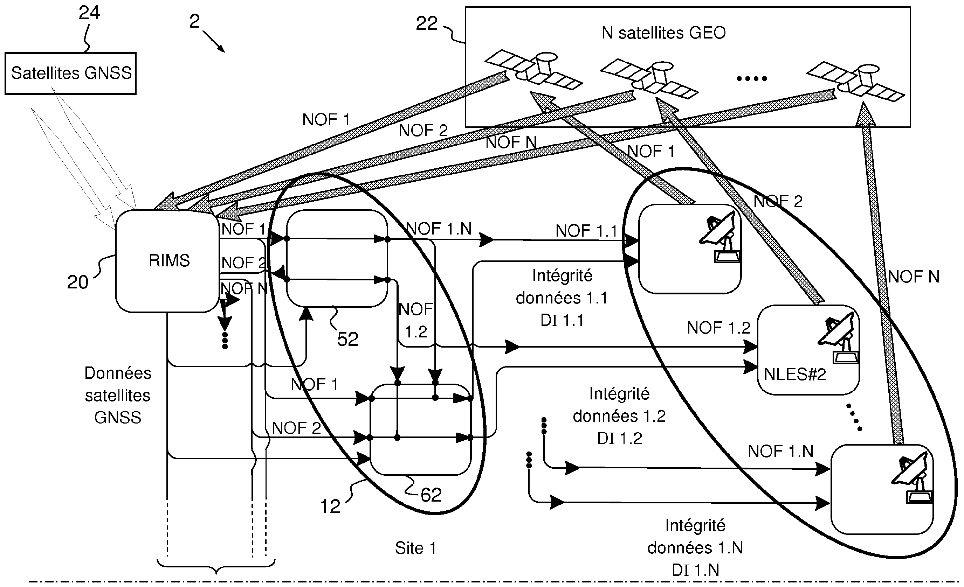

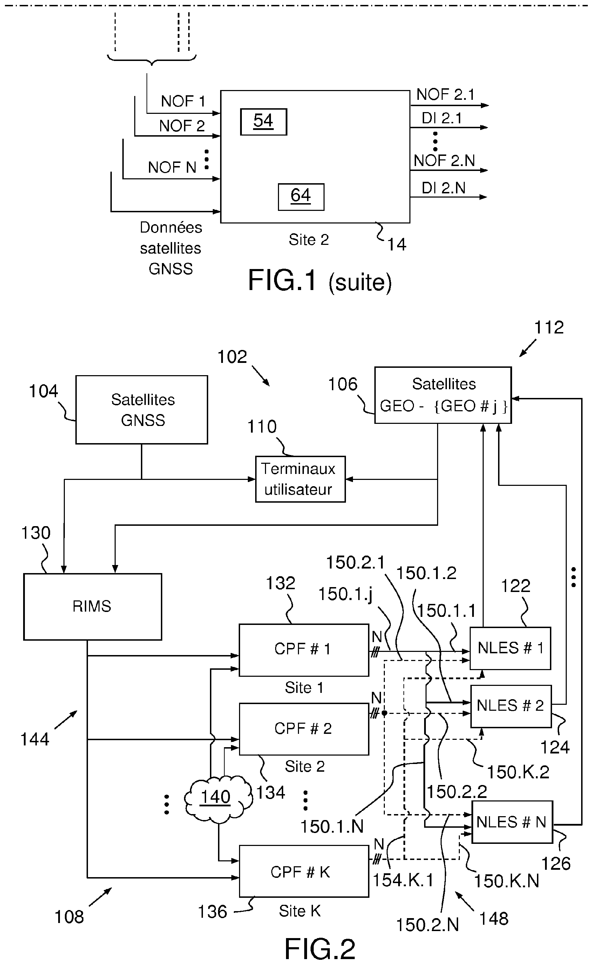

Il est connu d'utiliser des systèmes d'augmentation spatiaux SBAS avec redondance, le système EGNOS étant un exemple d'un tel système redondé 2, représenté ici de manière simplifiée sur la Figure 1 avec seulement deux centres de calculs 12, 14, géographiquement distants l'un de l'autre, au lieu des trois centres de calcul utilisés en pratique.

Suivant la Figure 1, les centres de calcul 12, 14, installés respectivement sur un premier site dénommé « site 1 » et sur un deuxième site dénommé « site 2 », reçoivent en provenance de l'ensemble 20 des stations RIMS et respectivement en parallèle les signaux de données de navigation d'un nombre entier N, ici au moins égal à trois, de satellites géostationnaires 22, notés NOF 1, NOF 2, ..., NOF N, et les signaux de navigation des satellites 24 de la constellation GNSS.

En fonction de ces signaux reçus, les premier et deuxième centres de calcul 12, 14 élaborent indépendamment leurs flux de messages de navigation respectifs, NOF 1.1, NOF 1.2, ...NOF 1.N pour le premier centre de calcul 12, NOF 2.1, NOF 2.2, ..., NOD 2.N pour le deuxième centre de calcul 14, qui sont chacun transmis à une station au sol de diffusion NLES#j, c'est-à-dire la station de diffusion ayant le même indice j que les signaux NOF 1.j, NOF 2.j. Par exemple, le premier centre de calcul 12 transmet le flux de messages NOF 1.2 à la station de diffusion de rang 2 tandis que le deuxième centre de calcul 14 transmet le flux de messages NOF 2.N à la station de rang N.

Chaque station au sol de diffusion NLES#j, j variant de 1 à N, sélectionne un des flux de messages de navigation parmi les flux des messages NOF1.j, NOF 2.j qu'elle reçoit et le transmet à destination des récepteurs d'utilisateurs, par l'intermédiaire d'un satellite géostationnaire de même indice j auquel la station au sol de diffusion NLES#j est associée au travers du plan des ressources de transmission dudit satellite.

Chaque station au sol de diffusion NLES#j reçoit également, en continu de chaque centre de calcul 12, 14, des données d'intégrité représentatives de l'intégrité des flux de messages NOF 1.j, NOF 2.j, reçus par la station NLESj et envoyés par les premier et deuxième centres de calcul 12, 14, ces données d'intégrité étant désignées respectivement par DI 1.j pour le flux de messages NOF 1.j transmis par le premier centre de calcul 12 et par DI 2.j pour le flux de messages NOF 2.j transmis par le deuxième centre de calcul 14.

Chaque centre de calcul 12, 14 comprend respectivement une unité 52, 54 de traitement et d'élaboration des flux de messages de navigation, les flux de messages NOF 1.j étant élaborés par l'unité 52 du premier centre de calcul 12 ou CPF#1, et les flux de messages NOF 2.j étant élaborés par l'unité 54 du deuxième centre de calcul 14 ou CPF#2.

Chaque centre de calcul 12, 14 comprend respectivement une unité d'élaboration de données d'intégrité 62, 64 pour l'élaboration des données d'intégrité DI 1.j, DI 2.j.

En cas de panne d'un des centres de calcul 12, 14, chaque station au sol de diffusion NLES#j sélectionne le message d'un des autre centres de calcul ou CPFs en bon état de fonctionnement, maintenant ainsi la continuité de transmission de flux de messages de navigation ou NOF à destination des récepteurs d'utilisateurs.

Les centres de calcul 12, 14 sont situés sur des sites géographiques différents et suffisamment éloignés pour éviter une panne complète en cas d'un problème majeur local (panne du réseau de communication sur un pays, accident industriel majeur, catastrophe naturelle, ...).

L'architecture classique du système SBAS et son procédé de mise en œuvre correspondants tels que décrits ci-dessus et à la Figure 1 utilisent une approche fondée sur une indépendance entre les flux de messages diffusés par les moyens de diffusion spatiaux que sont les satellites 22.

Ainsi, de manière générale un message de navigation, sensiblement différent notamment en terme de séquence de types de messages, est généré par satellite géostationnaire, ce qui entraine au sein d'un même centre de calcul la multiplication des chaines ou voies de traitement indépendantes, associées aux flux de messages reçus par les stations de réception RIMS 20, en fonction du nombre de satellites géostationnaires, et également l'augmentation des échanges de signaux entre les différentes entités fonctionnelles du système EGNOS pour l'analyse de pannes éventuelles.

On cherche ainsi à diminuer le volume des analyses à effectuer sur les données d'observation reçues par les stations de réception et d'observation RIMS lorsque le nombre de satellites géostationnaires augmente, cette diminution devant être déjà effective lorsque le nombre de satellites passe de un à deux.

Le problème technique est de diminuer la complexité de l'architecture d'un système SBAS, en particulier la complexité de l'architecture de ses centres de calcul ou CPFs lorsque le nombre de ses moyens de diffusion, par exemple des satellites géostationnaires, augmente sans altérer les performances usuelles de précision, de fiabilité, de continuité et de disponibilité, classiquement exigées pour un système SBAS.

De manière correspondante, le problème technique est de diminuer la complexité du procédé d'analyse des données de navigation GNSS et des données de navigation SBAS et du procédé de générations des flux de messages de navigation SBAS, mis en œuvre par le système SBAS lorsque le nombre de ses moyens de diffusion augmente, sans altérer les performances usuelles de précision, de fiabilité, de continuité et de disponibilité, classiquement exigées pour un système SBAS.

A cet effet, l'invention a pour objet un système d'augmentation spatial ou aéronautique, adapté pour améliorer la précision et la fiabilité des données délivrées par un système de navigation global par satellites comprenant :
.- un segment spatial ou aéronautique ayant un premier nombre entier N, supérieur ou égal deux, de moyens de diffusion spatiaux ou aéronautiques GEO#j, munis respectivement de leurs moyens d'émission/réception adaptés pour émettre des données reçues respectivement de stations au sol de diffusion associées NLES#j, à destination d'une même zone géographique prédéterminée ;
.- un segment sol d'infrastructure comportant
.- N stations au sol de transmission NLES#j, associées respectivement aux N moyens de diffusion spatiaux ou aéronautiques GEO#j pour leur transmettre des données de navigation et numérotées respectivement par un premier indice entier j variant de 1 à N, et
.- au moins une station au sol d'observation et de réception de signaux transmis par au moins un satellite du système de navigation global de satellites et par les N moyens diffusion spatiaux ou aéronautiques GEO#j,
.- un deuxième nombre K, supérieur ou égal à 2, de centres de calcul CPF#i, mutuellement redondés, numérotés respectivement par un deuxième indice i variant de 1 à K, et configurés pour calculer, à partir des signaux transmis par la ou les stations au sol d'observation et de réception, des flux ou séquences de messages de navigation NOF i.j, i variant de 1 à K et j variant de 1 à N, prêts à être transmis respectivement suivant l'indice j aux N stations au sol de diffusion NLES# j; au moins deux des K centres de calcul CPF#i étant localisés respectivement sur des sites géographiquement distants entre eux et reliés par un premier réseau de communications, l'au moins une station au sol de réception et d'observation, les N stations au sol de diffusion NLES#j étant connectés aux K centres de calcul CPF#i respectivement par un deuxième réseau de communications et un troisième réseau de communications. Le système d'augmentation spatial SBAS est caractérisé en ce que les K centres de calcul (CPF#i) sont configurés chacun pour élaborer une suite de N i-èmes flux parallèles de messages NOF i.j, j variant de 1 à N, tels que la suite de tous les flux de messages NOF i.j, indépendamment du centre de calcul CPF#i qui les élaborent, comporte une même séquence temporelle (MTs) de types MTs de messages indépendante des moyens de diffusion spatiaux ou aéronautiques (GEO#j), les types MTs de messages de la séquence (MTs) étant compris dans un ensemble prédéterminé {Tm} de types Tm de contenus de message de navigation.

Suivant des modes particuliers de réalisation, le système d'augmentation spatial ou aéronautique comprend l'une ou plusieurs des caractéristiques suivantes :
.- à chaque cycle de calcul actuel des messages, un seul centre de calcul CPF#m, pris parmi les K centres de calcul CPF#i, est sélectionné et autorisé à transmettre aux stations au sol de diffusion NLES#j les messages actuels NOF m.j, m désignant l'indice du centre de calcul CPF#m sélectionné au cycle de calcul actuel et le centre de calcul sélectionné CPF#m étant considéré comme le centre de calcul maitre du système d'augmentation durant ledit cycle de calcul actuel ;
.- les contenus des N flux de données NOF i.j d'un même centre de calcul CPF#i diffèrent seulement par le contenu de messages dont le ou les types de contenus concernent les trajectoires prédites ou récemment mesurées des N moyens de diffusion spatiaux ou aéronautiques ;
.- les types Tm de message sont normalisés et définis suivant des formats de contenus auxquelles se rapportent respectivement lesdits types, et les contenus de deux flux de données NOF i.j1, NOF i.j2, élaborés en parallèle par un même centre de calcul CPF i quelconque et destinées à deux moyens de diffusion spatiaux ou aéronautiques différents (j1≠j2), diffèrent seulement par le contenu des messages d'un premier type concernant des données d'éphémérides d'un ou plusieurs moyens de diffusion spatiaux ou aéronautiques, et/ou par le contenu des messages d'un deuxième type concernant des données de navigation d'un moyen de diffusion spatial ou aéronautique plus précises que les données d'éphémérides fournies par les messages du premier type ;
.- les messages sont définis par un document normatif international : RTCA MOPS DO-229-D, intitulé "Minimum Operational Performance Standards for Global Positionning System/Wide Area Augmentation equipment", et les premier et deuxième types de messages sont respectivement désignés par « MT17 » et « MT9 » ;
.- tous les flux de données générées par un même centre de calcul partagent un même algorithme mis en œuvre pour le traitement des donnés GNSS et SBAS reçues par l'au moins une station d'observation et pour l'élaboration de tous les flux des données s'agissant d'un même ordonnancement des types de messages et de mêmes contenus d'une majorité des messages de laquelle sont exclues des messages d'un premier type concernant des données d'éphémérides d'un ou plusieurs moyens de diffusion spatiaux ou aéronautiques, et/ou des messages d'un deuxième type concernant des données de navigation d'un moyen de diffusion spatial ou aéronautique plus précises que les données d'éphémérides fournies par les messages du premier type ;
.- les moyens de diffusions spatiaux ou aéronautiques sont compris dans l'ensemble formé par les satellites géostationnaires GEO, les satellites HEO, les satellites MEO, les satellites LEO, les drones, les ballons et les aéronefs ;
.- le deuxième nombre K de centres de calcul est égal à 2 ; et pour i variant de 1 à 2, chaque i-ème centre de calcul CPF# i comporte : un i-ème récepteur radioélectrique, localisé sur le i-ème site associé au i-ième centre de calcul ; et une i-ème unité d'autorisation du i-ème centre de calcul à transmettre les N flux de donnés NOF i.j suivant l'indice j aux N stations au sol de diffusion NLES# j . Chaque i-ème unité d'autorisation parmi les deux unités d'autorisation est configurée pour : à chaque cycle de calcul,
.- déterminer un mode d'activité du i-ème centre de calcul dans le système SBAS parmi un mode maître et un mode de secours, le mode maître autorisant l'unique centre de calcul CPF#m mis dans ce mode parmi les deux centres de calcul à émettre les flux de données NOF m.j générés aux N stations sol de diffusions NLES# j, j variant de 1 à N, le mode de secours interdisant au centre de calcul mis dans ce mode à transmettre ses flux de données aux stations sol de diffusion mais autorisant ledit centre de calcul à basculer en mode maître lorsqu'une panne persistante sur le centre de calcul actuellement en mode maitre a été détectée, le mode d'activité du i-ème centre de calcul étant déterminé en fonction :
   .* de la connaissance du centre de calcul actuellement en mode maître et en train d'émettre vers les stations de diffusion ;
   .* de la connaissance régulière des états de fonctionnement en termes d'absence ou d'existence de pannes des centres de calcul des sites distants et de leur mode d'activité ; et
   .* de la qualité de réception des messages transmis aux stations de diffusion ; et
   .* de la qualité des messages réellement émis par les moyens de diffusion spatiaux ou aéronautiques et reçu par le récepteur radioélectrique correspondant à l'unité d'autorisation ; et
   .- en fonction du mode d'activité déterminé, soit rester dans le mode d'activité précédent si le mode d'activité déterminé lui est identique, soit basculer dans le mode d'activité déterminé s'il est différent du mode d'activité précédent ;
.- en fonction du mode d'activité déterminé, autoriser ou interdire le i-ème centre de calcul d'émettre ses flux de données vers les N stations au sol de diffusion ;
   .- le nombre K de centres de calcul est supérieur ou égal à 3 ; et pour i variant de 1 à K, chaque i-ème centre de calcul CPF# i comporte : un i-ème récepteur radioélectrique, localisé sur le i-ème site associé au i-ième centre de calcul, et une i-ème unité d'autorisation du i-ème centre de calcul à transmettre les N flux de donnés NOF i.j suivant l'indice j aux N stations au sol de diffusion NLES# j. Chaque i-ème unité d'autorisation parmi les K unités d'autorisation est configurée pour : à chaque cycle de calcul,
.- déterminer un mode d'activité du i-ème centre de calcul dans le système SBAS parmi un unique mode maître, un mode de premier secours, et un mode de secours de réserve, le mode maître autorisant l'unique centre de calcul CPF#m mis dans ce mode parmi les K centres de calcul à émettre les flux de données NOF m.j générés aux N stations sol de diffusions NLES# j, j variant de 1 à N, le mode de premier secours interdisant au centre de calcul mis dans ce mode à transmettre ses flux de données aux stations sol de diffusion mais autorisant ledit centre de calcul à basculer en mode maître lorsqu'une panne persistante sur le centre de calcul actuellement en mode maitre a été détectée, le mode de secours de réserve interdisant au centre de calcul mis dans ce mode à transmettre ses flux de données aux stations sol de diffusion mais autorisant ledit centre de calcul à basculer en mode de premier secours lorsque une absence de centre de calcul mis en mode de premier secours a été détectée ; le mode d'activité du i-ème centre de calcul étant déterminé en fonction
   *de la connaissance du centre de calcul actuellement en mode maître et en train d'émettre vers les stations de diffusion ; * de la connaissance régulière des états de fonctionnement en termes d'absence ou d'existence de pannes des centres de calcul des sites distants et de leur mode d'activité ; et
   * de la qualité de réception des messages transmis aux stations de diffusion ; et
   * de la qualité des messages réellement émis par les moyens de diffusion spatiaux ou aéronautiques et reçu par le récepteur radioélectrique correspondant à l'unité d'autorisation ; et
.- en fonction du mode d'activité déterminé, soit rester dans le mode d'activité précédent si le mode d'activité déterminé lui est identique, soit basculer dans le mode d'activité déterminé s'il est différent du mode d'activité précédent ;
.- en fonction du mode d'activité déterminé, autoriser ou interdire le i-ème centre de calcul d'émettre ses flux de données vers les N stations au sol de diffusion ;
   .- chaque i-ème unité d'autorisation est configurée pour : contrôler la bonne réception de messages de retour envoyés par les stations au sol de diffusion accusant réception des messages transmis par l'unité d'autorisation au travers du troisième réseau de communications; et contrôler les états de fonctionnement des centre de calculs des sites distants et leur mode d'activité au travers du premier réseau de communications; et contrôler les messages réellement diffusés par les moyens de diffusion spatiaux ou aéronautiques pour confirmer ou non une absence de répétitivité d'une panne de liaison ;
   .- pour i variant de 1 à K, chaque i-ème centre de calcul comporte en outre au moins une i-ème unité de traitement et de création de flux de messages de navigation NOF i.j et au moins une i-ème unité de vérification de l'intégrité des flux de messages de navigation NOF i.j, variant de 1 à N ; le i-ème centre de calcul étant autorisé à émettre les flux de messages lorsque les vérifications d'intégrité ont réussies.

L'invention a également pour objet un procédé de gestion de flux de données de navigation d'un système d'augmentation spatial ou aéronautique adapté pour améliorer la précision et la fiabilité des données délivrées par un système de navigation par satellites. Le système d'augmentation spatial ou aéronautique comprend :
.- un segment spatial ou aéronautique ayant un premier nombre entier N, supérieur ou égal deux, de moyens de diffusion spatiaux ou aéronautiques GEO#j, munis respectivement de leurs moyens d'émission/réception adaptés pour émettre des données reçues de stations au sol de diffusion associées NLES#j, à destination d'une même zone géographique prédéterminée ;
.- un segment sol d'infrastructure comportant :
   .- N stations au sol de transmission NLES#j, associées respectivement aux N moyens de diffusion spatiaux ou aéronautiques GEO#j pour leur transmettre des données de navigation et numérotées respectivement par un premier indice entier j variant de 1 à N, et
   .- au moins une station au sol d'observation et de réception de signaux transmis par au moins un satellite du système de navigation global de satellites et par les N moyens diffusion spatiaux ou aéronautiques GEO#j,
   .- un deuxième nombre K, supérieur ou égal à 2, de centres de calcul CPF#i en redondance, numérotés respectivement par un deuxième indice i variant de 1 à K, et configurés pour calculer, à partir des signaux transmis par la ou les stations au sol de réception, des flux ou séquences de messages de navigation NOF i.j, i variant de 1 à K et j variant de 1 à N, prêts à être transmis respectivement suivant l'indice j aux N stations au sol de diffusion NLES#j; au moins deux des K centres de calcul (CPF#i) étant localisés respectivement sur des sites géographiquement distants entre eux et reliés par un premier réseau de communications, et l'au moins une station au sol de réception et d'observation, les N stations au sol de diffusion NLES#j respectivement, étant connectés aux K centres de calcul CPF#i par un deuxième réseau de communications et un troisième réseau de communications. Le procédé de gestion de flux de messages de navigation est caractérisé en ce qu'il comprend :
   .- une première étape dans laquelle les K centres de calcul CPF#i, i variant de 1 à K, élaborent chacun séparément une suite N flux parallèles de messages de navigation NOF i.j, j variant de 1 à N, la suite de tous les flux de données NOF i.j, indépendamment du centre de calcul CPF#i qui les élaborent, comporte une même séquence (MTs) de types MTs de messages, indépendante des moyens de diffusion spatiaux ou aéronautiques, les types MTs de messages de la séquence étant compris dans un ensemble prédéterminé {Tm} de types Tm de contenus de message de navigation.

Suivant des modes particuliers de réalisation, le procédé de gestion de flux de données de navigation comprend l'une ou plusieurs des caractéristiques suivantes :
.- les types {Tm} de message sont normalisés et définis suivant des formats de contenus auxquelles se rapportent respectivement lesdits types ; et les contenus de deux flux de données NOF i.j1, NOF i.j2, élaborés en parallèle par un même centre de calcul CPF i quelconque et destinées à deux moyens de diffusion spatiaux ou aéronautiques différents (j1≠j2), diffèrent seulement par le contenu des messages d'un premier type concernant des données d'éphémérides d'un ou plusieurs moyens de diffusion spatiaux ou aéronautiques, et/ou par le contenu des messages d'un deuxième type concernant des données de navigation d'un moyen de diffusion spatial ou aéronautique plus précises que les données d'éphémérides fournies par les messages du premier type ;
.- pour i variant de 1 à K , chaque i-ème centre de calcul CPF i comporte : un i-ème récepteur radioélectrique, localisé sur le i-ème site associé au i-ième centre de calcul, et une i-ème unité d'autorisation du i-ème centre de calcul à transmettre les N flux de donnés NOF i.j suivant l'indice j aux N stations au sol de diffusion NLES# j. Le procédé comprend en outre :
.- une deuxième étape dans laquelle chaque i-ème unité d'autorisation détermine dans la phase de calcul actuelle un mode d'activité actuel dans le système d'augmentation parmi un unique mode maître et un mode de secours, le mode maître autorisant l'unique centre de calcul CPFm mis dans ce mode parmi les K centres de calcul à émettre les flux de données NOF m.j générés aux N stations sol de diffusions NLES j, le mode de secours interdisant au centre de calcul mis dans ce mode à transmettre ses flux de données aux stations sol de diffusion mais autorisant ledit centre de calcul à basculer en mode maître de manière coordonnée avec d'autres centres de calcul le cas échéant lorsqu'une panne persistante sur le centre de calcul actuellement en mode maitre a été détectée ; le mode d'activité du i-ème centre de calcul étant déterminé en fonction :
   .* de la connaissance du centre de calcul actuellement en mode maître et en train d'émettre vers les stations de diffusion ;
   .* de la connaissance régulière des états de fonctionnement en termes d'absence ou d'existence de pannes des centres de calcul des sites distants et de leur mode d'activité ; et
   .* de la qualité de réception des messages transmis aux stations de diffusion ; et
   .* de la qualité des messages réellement émis par les moyens de diffusion spatiaux ou aéronautiques et reçu par le récepteur radioélectrique correspondant à l'unité d'autorisation ; et
.- une troisième étape dans laquelle, pour i variant de 1 à K, en fonction du mode d'activité déterminé, la i-ème unité d'autorisation reste dans le mode d'activité précédent si le mode d'activité déterminé lui est identique, soit bascule dans le mode d'activité déterminé s'il est différent du mode d'activité précédent ; et
.- une quatrième étape, dans laquelle pour i variant de 1 à K, en fonction du mode d'activité déterminé, la i-ème unité d'autorisation autorise ou interdit le i-ème centre de calcul d'émettre ses flux de données vers les N stations au sol de diffusion ;
   .- la deuxième étape de détermination du mode d'activité comporte des cinquième, sixième, septième étapes, chaque i-ème unité d'autorisation contrôlant dans la cinquième étape la bonne réception de messages de retour envoyés par les stations au sol de diffusion NLES#j accusant réception des messages transmis par la i-ème unité d'autorisation au travers du troisième réseau de communications; et chaque i-ème unité d'autorisation contrôlant si nécessaire dans la sixième étape les états de fonctionnement des centres de calcul des sites distants et leur mode d'activité au travers de messages de maintenance en provenance des unités d'autorisation distantes ; et chaque i-ème unité d'autorisation contrôlant si nécessaire dans la septième étape les messages réellement diffusés par les moyens de diffusion spatiaux ou aéronautiques pour confirmer ou non une absence de répétitivité d'une panne.

L'invention sera mieux comprise à la lecture de la description de plusieurs formes de réalisation qui va suivre, donnée uniquement à titre d'exemple et faite en se référant aux dessins sur lesquels :
- la Figure 1 est une vue d'une architecture générale d'un système SBAS classique multivoies dans lequel les messages de navigation diffusés par les satellites de diffusion SBAS sont totalement indépendants et requièrent dans chaque centre de calcul un nombre de chaines de traitement indépendantes égal au nombre de satellites de diffusion SBAS ;
- la Figure 2 est une vue d'une architecture matérielle générale d'un système SBAS monovoie selon l'invention dans lequel les messages de navigation diffusés par les satellites de diffusion SBAS sont sensiblement identiques et la complexité des centres de calcul est diminuée ;

- la Figure 3 est une vue d'une architecture matérielle détaillée du système SBAS monovoie selon l'invention de la Figure 2 ;
- la Figure 4 est une vue d'une architecture fonctionnelle et matérielle, encore plus détaillée que celle de la Figue 3, du système SBAS monovoie selon l'invention ;
- la Figure 5 est une vue partielle des architectures détaillées des Figures 3 et 4 mettant en lumière la configuration d'un centre de calcul CPF, déterminé en mode d'activité maître par son unité d'autorisation;
- la Figure 6 est une vue partielle des architectures détaillées des Figures 3 et 4 mettant en lumière la configuration d'un centre de calcul CPF, déterminé en mode d'activité de secours par son unité d'autorisation;
- la Figure 7 est un ordinogramme général d'un procédé de gestion de flux de données de navigation mis en œuvre par le système SBAS selon l'invention décrit dans les Figure 2 à 6.

Suivant la Figure 2, un système d'augmentation spatial SBAS 102, adapté pour améliorer la précision et la fiabilité des données délivrées par un système de navigation global par satellites GNSS 104, comprend un segment spatial ou aéronautique 106, un segment sol d'infrastructure 108 et un segment d'utilisateurs 110.

Le segment spatial ou aéronautique 106 comporte un premier nombre entier N, supérieur ou égal deux, de moyens de diffusion spatiaux ou aéronautiques 112, ici de manière particulière un ensemble de N satellites géostationnaires, désignés par la suite GEO#j, j étant un premier indice entier de numérotation variant de 1 à N. Les N satellites géostationnaires GEO#j, j variant de 1 à N, sont munis respectivement de leurs moyens d'émission/réception adaptés pour émettre des données reçues de stations au sol de diffusion associées différentes NLES#j, à destination d'une même zone géographique prédéterminée.

Le segment sol d'infrastructure 108 comporte N stations au sol de diffusion désignées par NLES#j, j variant de 1 à N, seules les stations NLES#1, NLES#2, NLES#N étant représentées sur la Figure 1 et désignées respectivement par les références numériques 122, 124, 126. Les N stations au sol de diffusion NLES#j sont associées respectivement aux N satellites géostationnaire GEO#j pour leur transmettre des données de navigation. De manière particulière, les stations au sol de diffusion 122, 124, 126 sont ainsi associées aux satellites géostationnaires GEO#1, GEO#2, et GEO#N.

Il est à remarquer que pour des raisons de sécurité et de disponibilité chaque station au sol de diffusion NLES#j peut être redondée par au moins une autre station au sol de secours, prête à exécuter les mêmes fonctions que celles de la station au sol nominale de diffusion NLES#j à laquelle elle est associée en cas de défaillance de ladite station au sol nominale de diffusion NLES#j. Le segment sol d'infrastructure 108 comporte également un ensemble 130 d'une ou plusieurs stations au sol d'observation et de réception RIMS de signaux transmis par au moins un satellite du système de navigation global de satellites GNSS 104 et par les N satellites géostationnaires GEO#j, j variant de 1 à N.

Le segment sol d'infrastructure 108 comporte également un deuxième nombre entier K, supérieur ou égal à 2, de centres de calcul CPF#i mutuellement redondés, numérotés respectivement par un deuxième indice i variant de 1 à K, et configurés pour calculer, à partir des signaux transmis par la ou les stations au sol de réception 130 RIMS, des suites de flux de messages de navigation NOF i.j, i variant de 1 à K et j variant de 1 à N, prêts à être transmis respectivement suivant l'indice j aux N stations au sol de diffusion NLES#j. Ici sur la Figure 2 et à titre d'exemple, K est supérieur ou égal à 3, et seuls les trois centres de calculs CPF#1, CPF#2, CPF#K sont représentés et désignés respectivement par les références numériques 132, 134, 136.

Les K centres de calcul CPF#i, i variant de 1 à K, sont localisés respectivement sur des sites « Site i » géographiquement distants entre eux et reliés par un premier réseau de communications140 pour échanger des messages de maintenance concernant leur état de fonctionnement respectif.

La ou les stations au sol de réception et d'observation RIMS 130 sont connectées aux K centres de calcul CPF#i, 132, 134, 136 par un deuxième réseau de communications 144 pour leur fournir à chaque cycle de calcul les données de navigation des satellites GNSS et les flux des messages de navigation retransmis par les satellites géostationnaires GEO#j.

Les N stations au sol de diffusion NLES#j, 122, 124, 126 sont connectées chacune aux K centres de calcul CPF#i, 132, 134, 136 par un troisième réseau de communications 148 pour recevoir les flux de messages de navigation SBAS élaborées par le centre de calcul qui se trouve dans un mode maître d'activité, ici le centre de calcul CPF#1 ou 132.

Par convention sur la Figure 2, les liaisons 150.1.j, j variant de 1 à N du troisième réseau de communications 148 qui sont actives et permettent le transit des messages de navigation SBAS élaborés par le centre de calcul maître, ici CPF#1 132, vers les stations au sol de diffusion NLES#j, j variant de 1 à N, sont tracées en traits ininterrompus. Les liaisons 150.i.j, i variant de 2 à K et j variant de 1 à N, du troisième réseau de communications 148 qui sont inactives et connectent les centres de calcul restants ici en mode de secours, c'est-à-dire les centres de calcul CPF#i, i variant de 2 à N, aux stations au sol de diffusion NLES#j, j variant de 1 à N sont tracées en traits interrompus.

Suivant l'invention, le système d'augmentation spatial SBAS 102 est caractérisé par le fait que les K centres de calcul CPF#i, i variant de 1 à K, sont configurés chacun pour élaborer une suite de i-èmes flux parallèles de messages NOF i.j, j variant de 1 à j, tels que toute suite des N flux parallèles de messages NOF i.j, indépendamment du centre de calcul CPF#i qui les élaborent, comporte une même séquence temporelle de types de messages indépendante des moyens de diffusion spatiaux que sont ici les satellites géostationnaires GEO#j. Les types MTs de messages de la séquence (MTs) sont compris dans un ensemble prédéterminé {Tm} de types de contenus de messages de navigation, m étant un entier variant de 1 au cardinal dudit ensemble prédéterminé {Tm}.

A chaque cycle courant de calcul des flux de messages NOF i.j, un seul centre de calcul CPF#m, pris parmi les K centres de calcul CPF#i, i variant de 1 à K, est sélectionné et autorisé par le système SBAS 102 à transmettre aux stations au sol de diffusion NLES# j, j variant de 1 à N, les messages courants associés aux flux de messages NOF m.j, m désignant l'indice du centre de calcul CPF#m sélectionné au cycle actuel de calcul et le centre de calcul CPF#m étant considéré comme le centre de calcul maitre du système SBAS 102 durant ce cycle de calcul actuel.

Les contenus des N flux de messages NOF i.j d'un même centre de calcul CPF#i diffèrent seulement par le contenu de messages dont le ou les types de contenus concernent les trajectoires prédites ou récemment mesurées des N satellites géostationnaires GEO#j, j variant de 1 à N.

Les types de message Tm de l'ensemble {Tm} sont normalisés et définis suivant des formats de contenus auxquels se rapportent respectivement lesdits types Tm. Les contenus de deux flux de messages NOF i.j1, NOF i.j2, élaborées en parallèle par un même centre de calcul CPF#i quelconque et destinées à deux satellites géostationnaires GEO#j1, GEO#j2 avec j1 et j2 différents, lorsque les flux sont différents diffèrent seulement par le contenu des messages d'un premier type concernant des données d'éphémérides d'un ou plusieurs satellites géostationnaires, et/ou par le contenu des messages d'un deuxième type concernant des données de navigation d'un satellite géostationnaire plus précises que les données d'éphémérides fournies par les messages du premier type.

Les types de messages Tm sont définis par un document normatif international : RTCA MOPS DO-229-D, intitulé "Minimum Operational Performance Standards for Global Positionning System/Wide Area Augmentation equipment", et les premier et deuxième types de messages sont respectivement désignés par « MT17 » et « MT9 » suivant cette norme.

Ainsi, tous les flux de messages de navigation générés par un même centre de calcul CPF partagent un même algorithme, mis en œuvre pour le traitement des données GNSS et SBAS reçues par la ou les stations d'observation RIMS 130 et pour l'élaboration de tous les flux de messages SBAS. Les flux de messages générés par l'algorithme sont caractérisés par un même ordonnancement des types de messages et de mêmes contenus d'une majorité des messages, à l'exception de messages d'un premier type concernant des données d'éphémérides d'un ou plusieurs satellites géostationnaires, et/ou des messages d'un deuxième type concernant des données de navigation d'un satellite géostationnaire plus précises que les données d'éphémérides fournies par les messages du premier type.

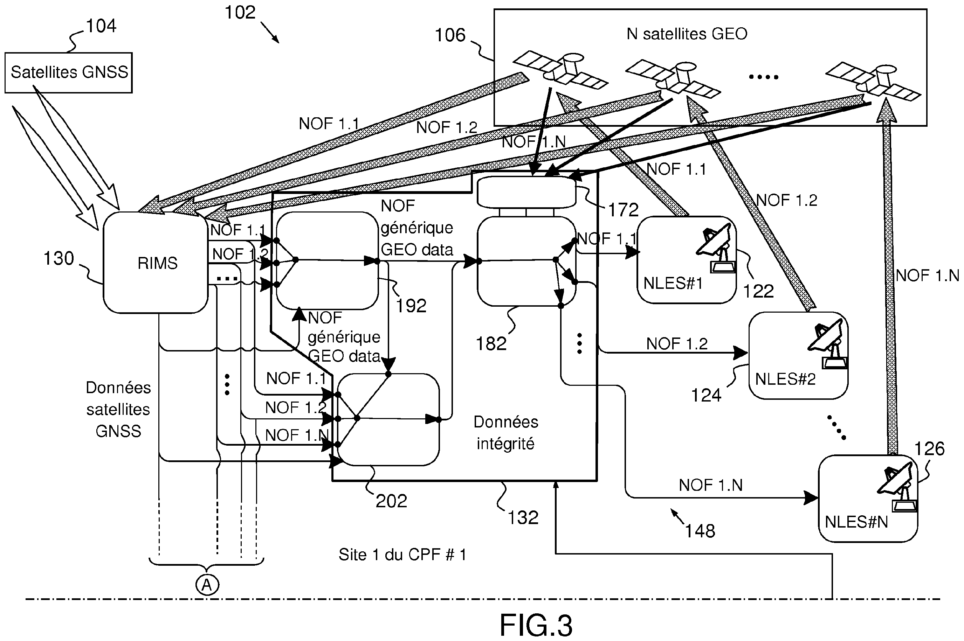

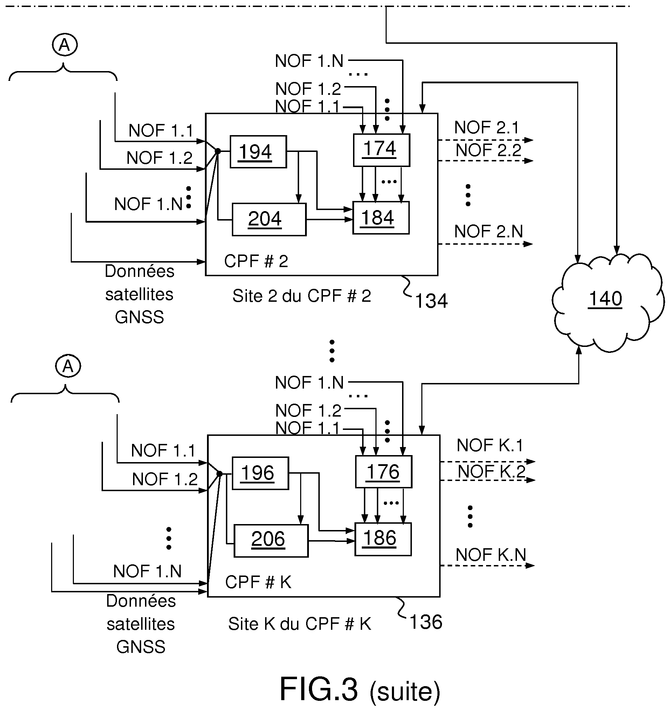

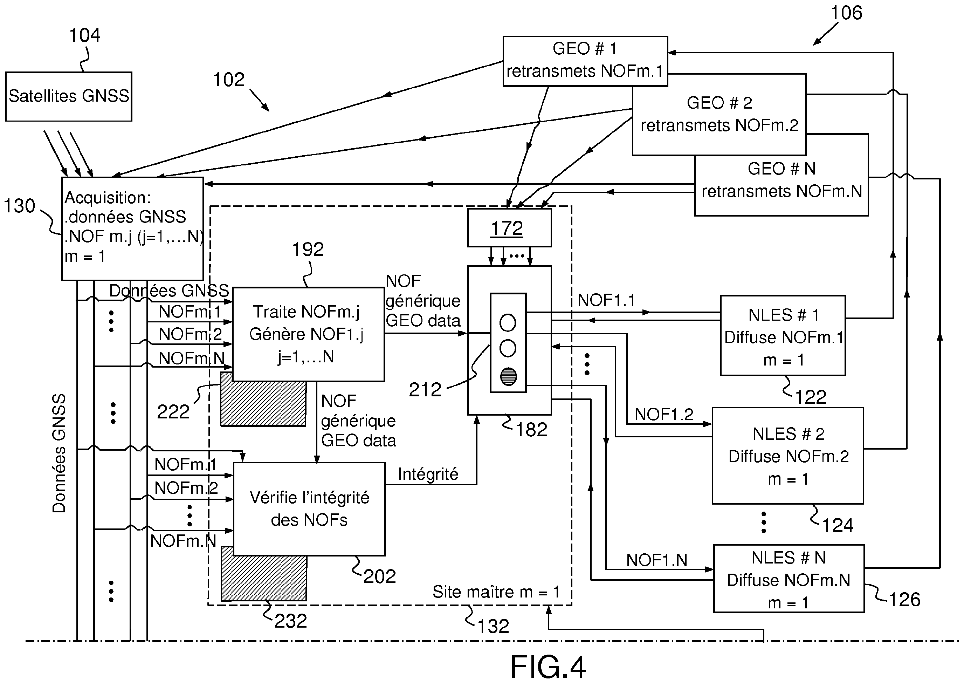

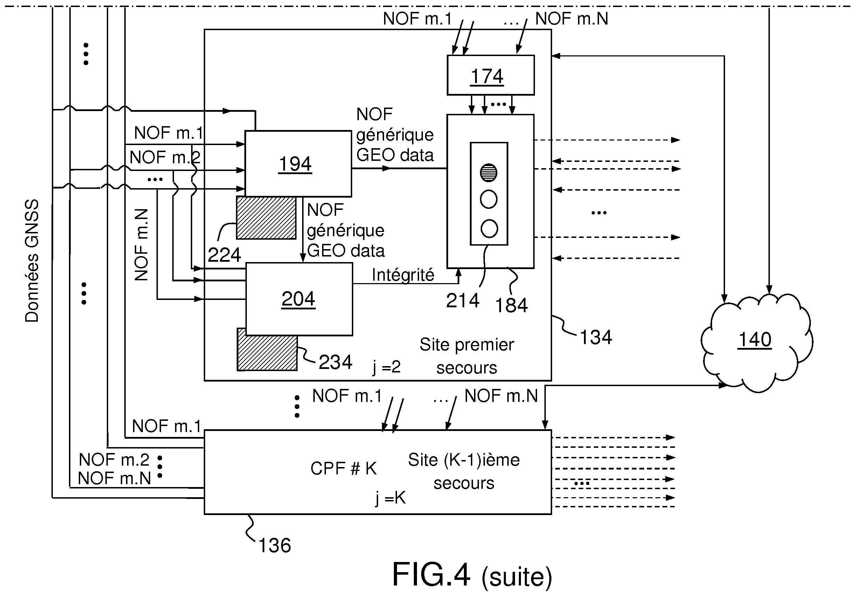

Suivant les Figures 3 et 4, le système SBAS monovoie 102 de la Figure 2 selon l'invention est décrit de manière plus détaillée. Lorsque des éléments sont repris de la Figure 2 dans les Figures 3 et 4, ils sont désignés respectivement par des références numériques identiques.

Pour i variant de 1 à K, chaque i-ème centre de calcul CPF#i, 132, 134, 136, comporte un i-ème récepteur radioélectrique, localisé sur le i-ème site associé au i-ième centre de calcul CPF#i, et une i-ème unité d'autorisation du i-ème centre de calcul CPF#i à transmettre suivant l'indice j les N flux de messages NOF i.j aux N stations au sol de diffusion NLES#j.

Ici sur les Figures 2 et 4, seuls les premier, deuxième, K-ième récepteurs radioélectriques respectivement désignés par 172, 174, 176, et seules les première, deuxième, K-ième unités d'autorisation, respectivement désignées par 182, 184, 186 sont représentés.

Pour i variant de 1 à K, chaque i-ème centre de calcul CPF#i, 132, 134, 136 comporte également une ou plusieurs i-ème unités de traitement et de création de flux de messages de navigation NOF i.j et une ou plusieurs i-ème unités de vérification de l'intégrité des flux de messages de navigation créés NOF i.j.

Lorsque pour des questions de redondance un i-ème centre de calcul CPF#i comporte plusieurs i-ièmes unités de traitement et de création de flux de messages de navigation NOF i.j et/ou plusieurs unités de vérification de l'intégrité des flux de messages de navigation créés NOF i.j, alors la i-ième unité d'autorisation correspondante est configurée pour sélectionner parmi les i-ièmes unités redondés de traitement et de création de flux de messages de navigation NOF i.j, et/ou respectivement parmi les unités de vérification de l'intégrité des flux de messages de navigation créés NOF i.j, laquelle unité de traitement et/ou respectivement laquelle vérification de l'intégrité sont actives. Ici sur les Figures 2 et 4, seules les première, deuxième, K-ième unités de traitement et de création de flux de messages de navigation, désignées par 192, 194, 196, et seules les première, deuxième, K-ième unités de vérification de l'intégrité des flux de messages de navigation créés, respectivement désignées par 202, 204, 206, sont représentées.

Chaque i-ème unité d'autorisation 182, 184, 186 parmi les K unités d'autorisation est configurée pour, déterminer à chaque cycle de calcul un mode d'activité du i-ème centre de calcul CPF#i au sein du système SBAS 102 parmi un unique mode maître, un unique mode de premier secours, et un mode de secours de réserve.

Le mode maître autorise un seul centre de calcul CPF#m, mis dans ce mode parmi les K centres de calcul, à émettre ses flux de données NOF m.j générés aux N stations sol de diffusions NLES# j, j variant de 1 à N.

Le mode de premier secours interdit à un unique centre de calcul mis dans ce mode à transmettre ses flux de données aux stations sol de diffusion NLES#j, j variant de 1 à N, mais autorise ledit centre de calcul à basculer en mode maître lorsqu'une panne persistante a été détectée sur le centre de calcul CPF#m précédemment en mode maitre dans une ou plusieurs phase(s) de calcul précédente(s).

Le mode de secours de réserve qui peut être utilisé lorsque K est supérieur ou égal à 3 interdit au centre de calcul mis dans ce mode à transmettre ses flux de données aux stations sol de diffusion NLES#j, j variant de 1 à N, mais autorise ledit centre de calcul à basculer en mode de premier secours lorsqu'une absence de centre de calcul mis en mode de premier secours a été détectée.

Le mode d'activité du i-ème centre de calcul est déterminé en fonction de la connaissance du centre de calcul actuellement en mode maître et en train d'émettre vers les stations de diffusion, de la connaissance régulière des états de fonctionnement en termes d'absence ou d'existence de pannes des centres de calcul des sites distants et de leur mode d'activité, de la qualité de réception des messages transmis aux stations de diffusion lorsque l'unité d'autorisation se trouve en mode maître, et de la qualité des messages réellement émis par les satellites géostationnaires et reçus par le récepteur radioélectrique correspondant à l'unité d'autorisation.

Chaque i-ème unité d'autorisation 182, 184, 186 parmi les K unités d'autorisation est également configurée à chaque cycle de calcul et en fonction du mode d'activité déterminé, pour soit rester dans le mode d'activité précédent si le mode d'activité déterminé actuel et le mode d'activité précédent sont identiques, soit basculer dans le mode d'activité déterminé s'il est différent du mode d'activité précédent.

Chaque i-ème unité d'autorisation 182, 184, 186 parmi les K unités d'autorisation est également configurée, à chaque cycle de calcul et en fonction du mode d'activité déterminé, pour autoriser ou interdire le i-ème centre de calcul CPF#i d'émettre ses flux de données vers les K stations au sol de diffusion.

Chaque i-ème unité d'autorisation parmi les K unités d'autorisation est également configurée pour :
.- contrôler la bonne réception de messages de retour envoyés par les stations au sol de diffusion NLES#j accusant réception des messages transmis par l'unité d'autorisation au travers du troisième réseau de communications 148; et
.- contrôler les états de fonctionnement des centres de calcul des sites distants et leur mode d'activité fournis par des messages de maintenance (« keep alive » en anglais) en provenance des unités d'autorisation distantes au travers du premier réseau de communications 140; et
.- contrôler les messages de navigation SBAS réellement diffusés par les satellites géostationnaires et reçus par le i-ème récepteur radioélectrique associé pour confirmer ou non une absence de répétitivité d'une panne du centre de calcul CPF#i et/ou de ses liaisons avec les autres entités distantes du système 102.

Il est à remarquer que lorsque la m-ième unité d'autorisation détermine le m-ième centre de calcul CPF#m en mode maitre dans la phase de calcul actuelle, le centre de calcul CPF#m est autorisé à émettre les flux de messages NOF m.j vers les K stations de diffusion seulement lorsqu'en supplément les vérifications d'intégrité des messages NOF m.j, exécutées par la m-ième unité de vérification d'intégrité associée ont réussi.

Suivant les Figures 3 et 4, le centre de calcul dont le mode d'activité déterminé est le mode maître est supposé ici le premier centre de calcul CPF#1 et par conséquent l'indice m est égal à 1 sur ces Figures 3 et 4. Les centres de calcul restants CPF#i, i variant de 2 à N sont donc supposés se trouver en mode de secours et s'interdisent d'émettre des flux de messages NOF i.j (i variant de 2 à N) vers les K stations au sol de diffusion. A l'instar de la Figure 2, les liaisons connectant la première unité d'autorisation 182 en mode maître aux K stations au sol de diffusion sont tracées en traits ininterrompus pour signifier qu'elles laissent passer les flux de messages NOF 1.j, tandis que les liaisons connectant les i-ièmes unités 184, 186 mis en mode secours aux K stations au sol de diffusion sont tracées en traits interrompus pour signifier qu'elles ne sont pas autorisées à laisser passer les flux de messages NOF i.j, i variant de 2 à K et j variant de 1 à N.

Suivant la Figure 4, le mode d'activité déterminé dans la phase de calcul actuelle par la première unité d'autorisation 182, ici le mode maître, est représenté par un premier feu de signalisation tricolore dont le spot éclairé « vert » est le spot d'extrémité inférieure pour signifier l'autorisation de transmettre des flux de messages NOF 1.j aux N stations au sol de diffusion. Le mode déterminé dans la phase de calcul actuelle par la deuxième unité d'autorisation 184, ici supposé le mode de premier secours, est représenté par un deuxième feu de signalisation tricolore dont le spot éclairé « rouge » est le spot d'extrémité supérieure pour signifier l'interdiction de transmettre des flux de messages NOF 2.j aux N stations au sol de diffusion. S'agissant des unités d'autorisation restantes pour i supérieur ou égal à trois, les modes d'activité déterminés sont des modes de secours de réserve, non représentés par des feux de signalisation tricolores par souci de lisibilité de la Figure 4.

Il est à remarquer que sur la Figure 4, pour chaque centre de calcul l'unité associée de traitement et d'élaboration des flux de message ainsi que l'unité de vérification des données d'intégrité associée sont dupliquées une seule fois par des équipements supplémentaires pour augmenter la fiabilité et la disponibilité du centre de calcul, seuls les équipements supplémentaires 222, 224, 232, 234 des premier et deuxième centres de calcul 132, 134 étant illustrés.

Dans une variante du système SBAS monovoie des Figure 2 à 4, le système SBAS monovoie selon l'invention comporte dans sa configuration minimale seulement deux centres de calcul et chaque centre de calcul consiste en une unique unité de traitement et d'élaboration de messages de navigation, une unique unité de vérification de l'intégrité des messages de navigation générées, un unique récepteur radioélectrique et une unique unité d'autorisation à transmettre les messages générés.

Afin d'augmenter la fiabilité du système, il est possible dans de multiples autres variantes de redonder un ou plusieurs équipement du centre de calcul au sein d'un même site, la configuration de duplication des unités de traitement et de vérification d'intégrité telle que proposée dans la Figure 4 étant une configuration de redondance typique particulière parmi toutes les redondances possibles.

Il est également possible de prévoir et de disposer de plusieurs centres de calcul CPFs co-localisés sur un même site pour s'affranchir de problèmes de réseau intersites.

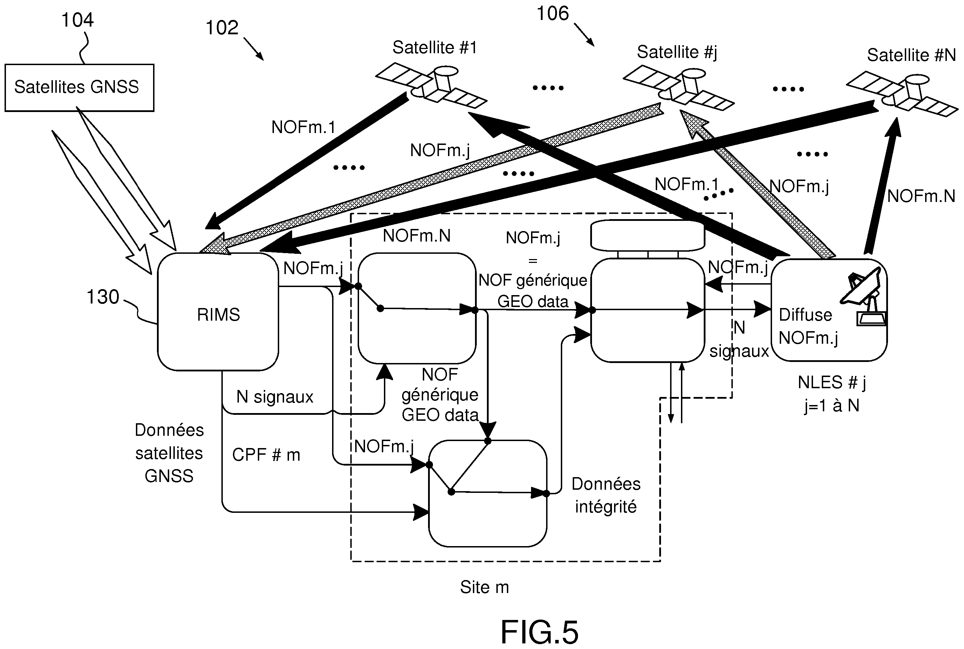

Suivant la Figure 5, l'architecture du système SBAS 102 monovoie est représentée du point de vue du centre de calcul en mode maître dont l'indice entier m peut varier entre 1 et K au cours du déroulement des phases de calcul.

La m-ième unité de traitement et d'élaboration élabore ici dans la phase de calcul actuelle N flux de messages NOF m.j , j variant de 1 à N et les délivre prêts à être transmis à la m-ième unité d'autorisation.

La m-ième unité d'autorisation détermine son mode d'activité en fonction des messages de retour des stations au sol de diffusion NLES#j, des messages de navigation NOF m.j réellement retransmis par les satellites géostationnaires 106, et les messages de maintenance des sites distants.

Si le mode déterminé est le mode maître, la m-ième unité d'autorisation autorise la transmission des flux de messages NOF m.j aux N stations au sol NLES#j.

Les N stations au sol de diffusion transmettent immédiatement les N flux de messages reçus NOF m.j à leurs satellites respectifs qui les diffusent suivant une même couverture géographique aux terminaux utilisateurs non représentés sur la Figure 5, aux stations de réception et d'observation RIMS 130, et aux récepteurs radioélectriques des centres de calcul.

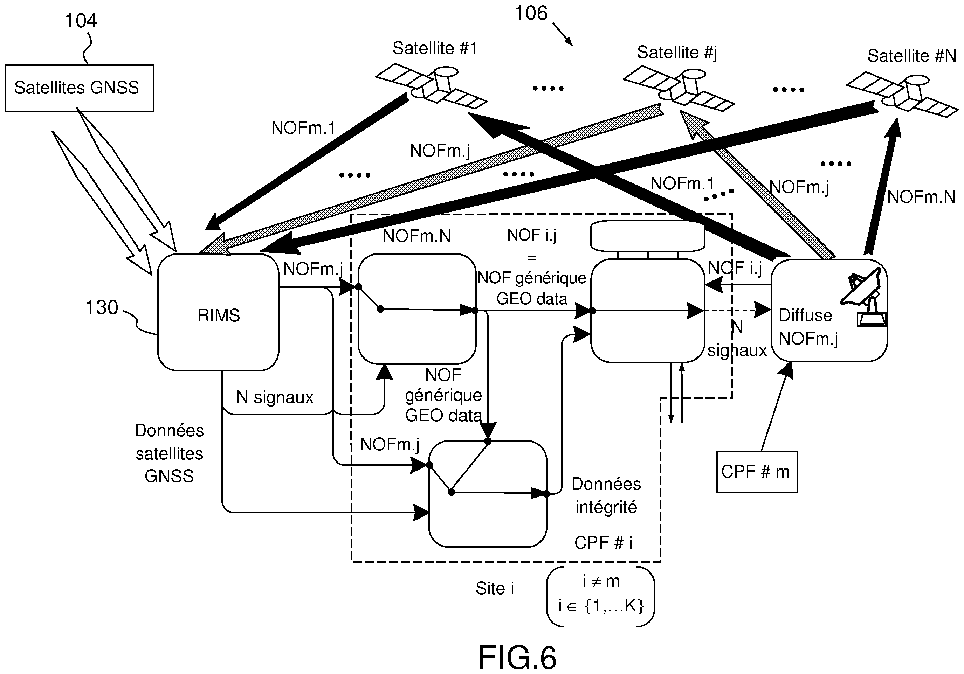

Suivant la Figure 6 et de manière complémentaire à la Figure 5, l'architecture du système SBAS 102 monovoie est représentée du point de vue d'un centre de calcul mis en mode de secours dont l'indice entier i compris entre 1 et K est différent de l'indice m du centre de calcul actuellement déterminé en mode maître.

Chaque i-ième unité de traitement et d'élaboration, i variant de 1 à K et différent de m, élabore dans la phase de calcul actuelle N flux de messages NOF i.j , j variant de 1 à N et les délivre prêts à être transmis à la i-ième unité d'autorisation.

La i-ième unité d'autorisation détermine son mode d'activité en fonction des messages de retour des stations au sol de diffusion, des messages de navigation NOF m.j réellement retransmis par les satellites géostationnaires 106, et les messages de maintenance des sites distants.

Si son mode déterminé est un mode de secours, la i-ième unité d'autorisation interdit au i-ième centre de calcul CPF#i la transmission des flux de messages NOF i.j aux N stations au sol NLES#j.

Les N stations au sol de diffusion ne reçoivent alors aucun message des i-ièmes centres de calcul déterminés en mode de secours.

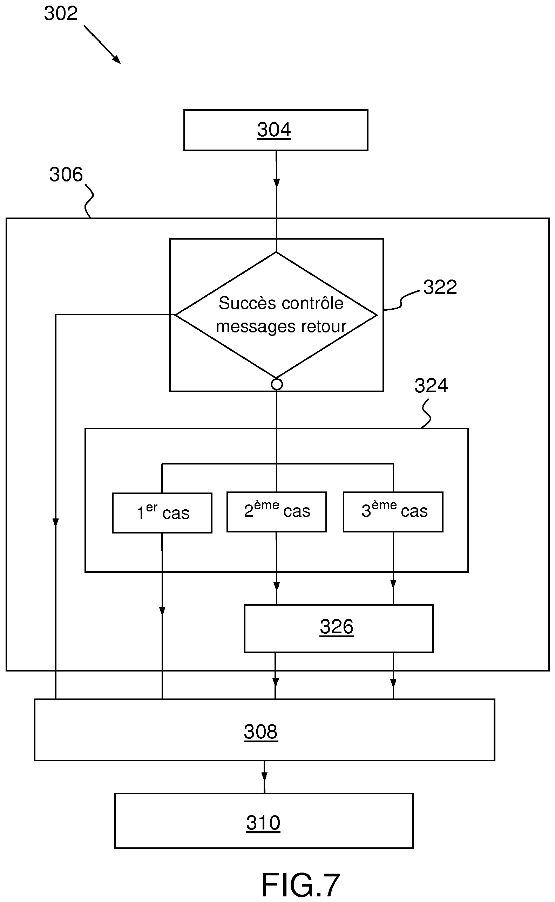

Suivant la Figure 7, un procédé de gestion de flux de données de navigation 302 selon l'invention est mis en œuvre par le système d'augmentation spatial SBAS monovoie selon l'invention, décrit dans les Figures 2 à 6 et dans lequel le deuxième nombre K de centres de calcul est supérieur ou égal à 3.

Le procédé de gestion de flux de données de navigation 302 comprend une première étape 304 dans laquelle les K centres de calcul CPFi, i variant de 1 à K, élaborent chacun séparément une suite de N flux parallèles de messages de navigation NOF i.j, j variant de 1 à N, sensiblement identiques.

La suite des N flux parallèles de messages NOF i.j, indépendamment du centre de calcul CPFi qui les élaborent, comporte une même séquence (MTs) de types MTs de messages, indépendante des satellites géostationnaires GEO#j, j variant de 1 à N, les types MTs de messages de la séquence étant compris dans un ensemble prédéterminé {Tm} de types Tm de contenus de message de navigation.

Les types de message Tm de l'ensemble {Tm} sont normalisés et définis suivant des formats de contenus auxquels se rapportent respectivement lesdits types Tm.

Les contenus de deux flux de messages NOF i.j1, NOF i.j2, élaborées en parallèle par un même centre de calcul CPF#i quelconque et destinées à deux satellites géostationnaires GEO#j1, GEO#j2 avec j1 et j2 différents, lorsque les flux sont différents diffèrent seulement par le contenu des messages d'un premier type concernant des données d'éphémérides d'un ou plusieurs satellites géostationnaires, et/ou par le contenu des messages d'un deuxième type concernant des données de navigation d'un satellite géostationnaire plus précises que les données d'éphémérides fournies par les messages du premier type.

Suivant la Figure 7, le procédé de gestion de flux des données de navigation 302 comprend en outre, exécutées à chaque cycle de calcul par chaque i-ème unité d'autorisation parmi les K unités d'autorisation, des deuxième, troisième et quatrième étapes 306, 308, 310.

Au cours de la deuxième étape 306, chaque i-ème unité d'autorisation détermine un mode d'activité du i-ème centre de calcul CPF#i dans le système SBAS 102 parmi un unique mode maître, un mode de premier secours, et un mode de secours de réserve.

Le mode maître autorise un seul centre de calcul CPF#m, mis dans ce mode parmi les K centres de calcul, à émettre ses flux de données NOF m.j générés aux N stations sol de diffusions NLES# j, j variant de 1 à N.

Le mode de premier secours interdit à un unique centre de calcul mis dans ce mode à transmettre ses flux de données aux stations sol de diffusion NLES#j, j variant de 1 à N, mais autorise ledit centre de calcul à basculer en mode maître lorsqu'une panne persistante a été détectée sur le centre de calcul CPF#m précédemment en mode maitre dans une ou plusieurs phase(s) de calcul précédente(s).

Le mode de secours de réserve qui peut être utilisé lorsque K est supérieur ou égal à 3 interdit au centre de calcul mis dans ce mode à transmettre ses flux de données aux stations sol de diffusion NLES#j, j variant de 1 à N, mais autorise ledit centre de calcul à basculer en mode de premier secours lorsque une absence de centre de calcul mis en mode de premier secours a été détectée.

Le mode d'activité du i-ème centre de calcul CPF#i est déterminé en fonction de la connaissance du centre de calcul actuellement en mode maître et en train d'émettre vers les stations de diffusion, de la connaissance régulière des états de fonctionnement en termes d'absence ou d'existence de pannes des centres de calcul des sites distants et de leur mode d'activité, de la qualité de réception des messages transmis aux stations de diffusion lorsque l'unité d'autorisation se trouve en mode maître, et de la qualité des messages réellement émis par les satellites géostationnaires et reçus par le récepteur radioélectrique correspondant à l'unité d'autorisation.

Au cours de la troisième étape 308, pour i variant de 1 à K, en fonction du mode d'activité déterminé, la i-ème unité d'autorisation reste dans le mode d'activité précédent si le mode d'activité déterminé lui est identique, ou bascule dans le mode d'activité déterminé s'il est différent du mode d'activité précédent déterminé dans la phase de calcul précédente.

Au cours de la quatrième étape 310, pour i variant de 1 à K, à partir du mode d'activité déterminé dans la deuxième étape 306, la i-ème unité d'autorisation autorise ou interdit le i-ème centre de calcul d'émettre ses flux de données vers les N stations au sol de diffusion. Elle autorise l'émission lorsque le mode d'activité déterminé est le mode maître et interdit le i-ième centre de calcul CPF#i d'émettre lorsque le mode d'activité déterminé est un mode de secours.

La deuxième étape 306 de détermination du mode d'activité comporte des cinquième, sixième et septième étapes 322, 324, 326.

Au cours de la cinquième étape 322, chaque i-ème unité d'autorisation contrôle la bonne réception de messages de retour envoyés par les stations au sol de diffusion accusant réception des messages transmis par l'unique unité d'autorisation mis en mode maitre à tous les centres de calcul au travers du premier réseau de communications.

Au cours de la sixième étape 324, chaque i-ème unité d'autorisation contrôle si nécessaire les états de fonctionnement des centres de calcul des sites distants et leur mode d'activité au travers de messages de maintenance en provenance des unités d'autorisation distantes.

Au cours de la septième étape 326, chaque i-ème unité d'autorisation contrôle si nécessaire les messages réellement diffusés par les satellites géostationnaires pour confirmer ou non une absence de répétitivité d'une panne.

Au cours de la cinquième étape 322, après avoir vérifié la bonne réception des messages de retour des stations au sol de diffusion et en cas de succès d'une telle vérification, chaque i-ème unité d'autorisation contrôle l'origine des messages NOF m.j précédemment émis en termes du rang m du centre de calcul qui les a transmis. Dans le cas où le rang de la i-ième unité d'autorisation et le rang m de l'origine contrôlée des messages sont identiques, le mode d'activité déterminé du i-ème centre de calcul est le mode maître. Dans le cas où le rang du i-ième centre de calcul et le rang m de l'origine contrôlée des messages sont différents, le mode d'activité déterminé est un mode de secours identique au précédent.

En cas d'échec d'une bonne réception des messages de retour en provenance des stations au sol de diffusion, ou lorsqu'un problème de communication du i-ième centre de calcul auquel est associé la i-ème unité d'autorisation est détecté, la i-ième unité d'autorisation considère qu'il existe une panne de communication entre son site i et le ou les sites des stations au sol de diffusion, et alors contrôle dans la sixième étape 324 la bonne communication avec les unités d'autorisation distantes assurée par le premier réseau de communications 140.

Au cours de la sixième étape 324 et suivant un premier cas 334, lorsque le mode d'activité au cycle précédent de la i-ième unité d'autorisation est le mode de premier secours ou un mode de secours de réserve et lorsqu'un message de maintenance, reçu d'une unité d'autorisation distante d'un site redondant distant, confirme que ce dernier fonctionne en mode maître, le mode d'activité actuel déterminé de la i-ième unité d'autorisation est le mode de secours précédent.

Au cours de la sixième étape 324 et suivant un deuxième cas 336, lorsque le mode d'activité au cycle précédent de la i-ième unité d'autorisation est le mode maître et lorsque les messages de maintenance reçus des unités d'autorisation distantes des sites redondants distants confirment que ces dernières fonctionnent en mode de secours, la i-ième unité d'autorisation s'assure durant la septième étape 326 de la non répétitivité de la panne de la liaison avec les stations de diffusion en vérifiant les messages du flux NOFm.j réellement transmis par les satellites géostationnaires et reçus par le i-ième récepteur radioélectrique associé. Lorsque, par comparaison avec le message NOFi.j de la i-ième unité d'autorisation transmis à la station de diffusion associé, le message NOFj réellement transmis par le satellite stationnaire de rang j indique une panne récurrente de la i-ième unité d'autorisation, le mode d'activité déterminé de la i-ième unité d'autorisation devient une unité de secours de réserve qui doit être réparée et ce changement d'état est indiqué dans un message de maintenance du i-ième centre de calcul. Dans le cas d'une non-récurrence de panne, une perte de communication intempestive étant considérée, une seconde chance d'émettre un message correctement est laissée à la i-ième unité d'autorisation, et le mode d'activité déterminé actuelle de la i-ième unité d'autorisation reste le mode maître.

Au cours de la sixième étape 324 et suivant un troisième cas, lorsque la i-ième unité d'autorisation ne reçoit pas de message de maintenance provenant de l'unité d'autorisation de premier secours d'un site redondant et qu'une panne de liaison intersites sur le premier réseau de communication est confirmée au niveau du site local de l'unité d'autorisation, et que le mode d'activité au cycle précédent de la i-ième unité d'autorisation est le mode maître (m précédent est égal à i), la i-ième unité d'autorisation s'assure de la non-répétitivité de cette panne dans la septième étape 326 en vérifiant le message NOF m.j réellement transmis par les satellites géostationnaires et reçus par le récepteur radioélectrique associé. Lorsque, par comparaison avec les messages NOF m.j du m-ième centre de calcul transmis aux stations de diffusion associé, les message NOF m.j réellement transmis par les satellites géostationnaires indiquent une panne récurrente du i-ième centre de calcul précédemment en mode maître, la i-ième unité d'autorisation change de mode et son mode déterminé actuel est un mode de secours de réserve. Dans le cas d'une non-récurrence de la panne, une perte de communication intempestive étant considérée, une seconde chance d'émettre un message correctement est laissé au i-ième centre de calcul et le mode d'activité actuel déterminé par la i-ième unité est le mode maître.

Le nombre de cycles pouvant être considérés comme des pannes intempestives est ajusté selon des critères d'intégrité et de disponibilité propres au système SBAS.

Lorsque Le deuxième nombre K de centres de calcul du système d'augmentation spatial ou aéronautique est égal à 2, le premier mode de secours est utilisé en tant que seul mode de secours. Pour i variant de 1 à 2, chaque i-ème centre de calcul CPF# i comporte :
.- un i-ème récepteur radioélectrique, localisé sur le i-ème site associé au i-ième centre de calcul, et
.- une i-ème unité d'autorisation du i-ème centre de calcul à transmettre les N flux de donnés NOF i.j suivant l'indice j aux N stations au sol de diffusion (NLES# j).

Chaque i-ème unité d'autorisation parmi les deux unités d'autorisation est configurée pour, à chaque cycle de calcul, déterminer un mode d'activité du i-ème centre de calcul dans le système SBAS parmi un mode maître et un mode de secours. Le mode maître autorise l'unique centre de calcul (CPF#m) mis dans ce mode parmi les deux centres de calcul à émettre les flux de données NOF m.j générés aux N stations sol de diffusions NLES# j, j variant de 1 à N. Le mode de secours interdit au centre de calcul mis dans ce mode à transmettre ses flux de données aux stations sol de diffusion mais autorisant ledit centre de calcul à basculer en mode maître lorsqu'une panne persistante sur le centre de calcul actuellement en mode maitre a été détectée

Le mode d'activité du i-ème centre de calcul est déterminé en fonction de la connaissance du centre de calcul actuellement en mode maître et en train d'émettre vers les stations de diffusion, de la connaissance régulière des états de fonctionnement en termes d'absence ou d'existence de pannes des centres de calcul des sites distants et de leur mode d'activité, et de la qualité de réception des messages transmis aux stations de diffusion, et de la qualité des messages réellement émis par les moyens de diffusion spatiaux ou aéronautiques et reçu par le récepteur radioélectrique correspondant à l'unité d'autorisation.

Chaque i-ème unité d'autorisation parmi les deux unités d'autorisation est configurée pour, à chaque cycle de calcul :
.- en fonction du mode d'activité déterminé, soit rester dans le mode d'activité précédent si le mode d'activité déterminé lui est identique, soit basculer dans le mode d'activité déterminé s'il est différent du mode d'activité précédent ; et
.- en fonction du mode d'activité déterminé, autoriser ou interdire le i-ème centre de calcul d'émettre ses flux de données vers les N stations au sol de diffusion.

De manière générale, un nombre W, supérieur ou égal à N, de stations de diffusion, se partagent en émission les N moyens de diffusion, chaque moyen de diffusion étant associé à au moins une station de diffusion et chaque station de diffusion étant associée à un unique moyen de diffusion. Par exemple, W peut être égal à 2N, et une paire de stations de diffusion différente est associée à un moyen de diffusion différent.

De manière générale, les satellites GEO#j, j variant de 1 à N, du système SBAS monovoie des Figures 2 à 6 peuvent être remplacés par des moyens de diffusions spatiaux ou aéronautiques, compris dans l'ensemble formé par les satellites géostationnaires, les satellites à orbites elliptiques hautes et/ou polaires ou HEO (en anglais « High-Elliptical Orbit »), les satellites à orbites moyennes ou MEO (en anglais « Medium-Earth Orbit »), les satellites à orbites basses ou LEO (en anglais « Low-Earth Orbit »), les drones, les ballons et les aéronefs.

La réception des flux de messages réellement retransmis par les moyens de diffusion spatiaux ou aéronautiques à l'aide de récepteurs radioélectriques localisés au sein des centres de calcul est requise dès l'utilisation d'une configuration minimale à deux sites distants pour diminuer le temps de réaction d'une détection d'un problème sur les flux de messages diffusés via une boucle de transmission plus courte (centre de calcul - stations au sol de diffusion - moyens de diffusion spatiaux ou aéronautiques - centre de calcul).

## Revendications

1. Système d'augmentation spatial ou aéronautique, adapté pour améliorer la précision et la fiabilité des données délivrées par un système de navigation global par satellites (104) comprenant :
.- un segment spatial ou aéronautique (106) ayant un premier nombre entier N, supérieur ou égal deux, de moyens de diffusion spatiaux ou aéronautiques (GEO#j), munis respectivement de leurs moyens d'émission/réception adaptés pour émettre des données reçues respectivement de stations au sol de diffusion associées (NLES#j), à destination d'une même zone géographique prédéterminée ;
.- un segment sol d'infrastructure (108) comportant
. N stations au sol de diffusion (122, 124, 126, NLES#j), associées respectivement aux N moyens de diffusion spatiaux ou aéronautiques (GEO#j) pour leur transmettre des données de navigation et numérotées respectivement par un premier indice entier j variant de 1 à N, et
.- au moins une station au sol d'observation et de réception (130) de signaux transmis par au moins un satellite du système de navigation global de satellites (104) et par les N moyens de diffusion spatiaux ou aéronautiques (GEO#j),
.- un deuxième nombre K, supérieur ou égal à 2, de centres de calcul (132, 134, 136, CPF#i), mutuellement redondés, numérotés respectivement par un deuxième indice i variant de 1 à K, et configurés pour calculer, à partir des signaux transmis par la ou les stations au sol d'observation et de réception (130), des flux ou séquences de messages de navigation de trames augmentées de navigation NOF i.j, i variant de 1 à K et j variant de 1 à N, prêts à être transmis respectivement suivant l'indice j aux N stations au sol de diffusion (NLES# j) ;
au moins deux des K centres de calcul (132, 134, 136, CPF#i) étant localisés respectivement sur des sites géographiquement distants entre eux et reliés par un premier réseau de communications (140),
l'au moins une station au sol de réception et d'observation (130), les N stations au sol de diffusion (NLES# j) étant connectées aux K centres de calcul (CPF#i) respectivement par un deuxième réseau de communications (144) et un troisième réseau de communications (148),
les K centres de calcul (CPF#i) étant configurés chacun pour élaborer une suite de N i-èmes flux parallèles de messages NOF i.j, j variant de 1 à N, tels que la suite de tous les flux de messages NOF i.j, indépendamment du centre de calcul (132, 134, 136, CPF#i) qui les élaborent, comporte une même séquence temporelle (MTs) de types MTs de messages indépendante des moyens de diffusion spatiaux ou aéronautiques (GEO#j), les types MTs de messages de la séquence (MTs) étant compris dans un ensemble prédéterminé {Tm} de types Tm de contenus de message de navigation ;
le système d'augmentation spatial ou aéronautique étant **caractérisé en ce que** :
chaque centre de calcul CPF#i est configuré de sorte que les contenus des N flux de données NOF i.j que ledit centre de calcul CPF#i génère diffèrent seulement par le contenu de messages dont le ou les types de contenus concernent les trajectoires prédites ou récemment mesurées des N moyens de diffusion spatiaux ou aéronautiques.

2. Système d'augmentation spatial ou aéronautique, adapté pour améliorer la précision et la fiabilité des données délivrées par un système de navigation global par satellites (104) comprenant :
.- un segment spatial ou aéronautique (106) ayant un premier nombre entier N, supérieur ou égal deux, de moyens de diffusion spatiaux ou aéronautiques (GEO#j), munis respectivement de leurs moyens d'émission/réception adaptés pour émettre des données reçues respectivement de stations au sol de diffusion associées (NLES#j), à destination d'une même zone géographique prédéterminée ;
.- un segment sol d'infrastructure (108) comportant
.- N stations au sol de diffusion (122, 124, 126, NLES#j), associées respectivement aux N moyens de diffusion spatiaux ou aéronautiques (GEO#j) pour leur transmettre des données de navigation et numérotées respectivement par un premier indice entier j variant de 1 à N, et
.- au moins une station au sol d'observation et de réception (130) de signaux transmis par au moins un satellite du système de navigation global de satellites (104) et par les N moyens de diffusion spatiaux ou aéronautiques (GEO#j),
.- un deuxième nombre K, supérieur ou égal à 2, de centres de calcul (132, 134, 136, CPF#i), mutuellement redondés, numérotés respectivement par un deuxième indice i variant de 1 à K, et configurés pour calculer, à partir des signaux transmis par la ou les stations au sol d'observation et de réception (130), des flux ou séquences de messages de navigation de trames augmentées de navigation NOF i.j, i variant de 1 à K et j variant de 1 à N, prêts à être transmis respectivement suivant l'indice j aux N stations au sol de diffusion (NLES# j) ;
au moins deux des K centres de calcul (132, 134, 136, CPF#i) étant localisés respectivement sur des sites géographiquement distants entre eux et reliés par un premier réseau de communications (140),
l'au moins une station au sol de réception et d'observation (130), les N stations au sol de diffusion (NLES# j) étant connectées aux K centres de calcul (CPF#i) respectivement par un deuxième réseau de communications (144) et un troisième réseau de communications (148) ;
les K centres de calcul (CPF#i) étant configurés chacun pour élaborer une suite de N i-èmes flux parallèles de messages NOF i.j, j variant de 1 à N, tels que la suite de tous les flux de messages NOF i.j, indépendamment du centre de calcul (132, 134, 136, CPF#i) qui les élaborent, comporte une même séquence temporelle (MTs) de types MTs de messages indépendante des moyens de diffusion spatiaux ou aéronautiques (GEO#j), les types MTs de messages de la séquence (MTs) étant compris dans un ensemble prédéterminé {Tm} de types Tm de contenus de message de navigation ;
le système d'augmentation spatial ou aéronautique étant **caractérisé en ce que** :
chaque centre de calcul CPF#i est configuré de sorte que tous les flux de données qu'il génère partagent un même algorithme, mis en œuvre pour le traitement des donnés GNSS et SBAS reçues par l'au moins une station au sol de réception et d'observation (130) et pour l'élaboration de tous les flux des données s'agissant d'un même ordonnancement des types de messages et de mêmes contenus d'une majorité des messages de laquelle sont exclues des messages d'un premier type concernant des données d'éphémérides d'un ou plusieurs moyens de diffusion spatiaux ou aéronautiques, et/ou des messages d'un deuxième type concernant des données de navigation d'un moyen de diffusion spatial ou aéronautique plus précises que les données d'éphémérides fournies par les messages du premier type.

3. Système d'augmentation spatial ou aéronautique selon la revendication 1 ou la revendication 2, dans lequel les K centres de calculs sont configurés de sorte qu'à chaque cycle de calcul actuel des messages, un seul centre de calcul (CPF#m), pris parmi les K centres de calcul (CPF#i), est sélectionné et autorisé à transmettre aux stations au sol de diffusion (NLES#j) les messages actuels NOF m.j, m désignant l'indice du centre de calcul (CPF#m) sélectionné au cycle de calcul actuel et le centre de calcul sélectionné (CPF#m) étant considéré comme le centre de calcul maitre du système d'augmentation durant ledit cycle de calcul actuel.

4. Système d'augmentation spatial SBAS selon l'une quelconque des revendications 1 à 3, dans lequel
chaque centre de calcul CPF#i est configuré de sorte que les contenus de deux flux de données NOF i.j1, NOF i.j2, que ledit centre de calcul CPF#i élabore en parallèle et qui sont destinées à deux moyens de diffusion spatiaux ou aéronautiques différents (j1≠j2), diffèrent seulement par le contenu des messages d'un premier type concernant des données d'éphémérides d'un ou plusieurs moyens de diffusion spatiaux ou aéronautiques, et/ou par le contenu des messages d'un deuxième type concernant des données de navigation d'un moyen de diffusion spatial ou aéronautique plus précises que les données d'éphémérides fournies par les messages du premier type.

5. Système d'augmentation spatial ou aéronautique selon la revendication 4, dans lequel les messages sont définis par un document normatif international : RTCA MOPS DO-229-D, intitulé "Minimum Operational Performance Standards for Global Positionning System/Wide Area Augmentation equipment", et les premier et deuxième types de messages sont respectivement désignés par « MT17 » et « MT9 ».

6. Système d'augmentation spatial ou aéronautique selon l'une quelconque des revendications 1 à 5, dans lequel les moyens de diffusions spatiaux ou aéronautiques sont compris dans l'ensemble formé par les satellites géostationnaires GEO, les satellites HEO, les satellites MEO, les satellites LEO, les drones, les ballons et les aéronefs.

7. Système d'augmentation spatial ou aéronautique selon l'une quelconque des revendications 1 à 6, dans lequel
Le deuxième nombre K de centres de calcul est égal à 2 ; et
Pour i variant de 1 à 2, chaque i-ème centre de calcul CPF# i comporte Un i-ème récepteur radioélectrique, localisé sur le i-ème site associé au i-ième centre de calcul, et
Une i-ème unité d'autorisation du i-ème centre de calcul à transmettre les N flux de donnés NOF i.j suivant l'indice j aux N stations au sol de diffusion (NLES# j) ; et
chaque i-ème unité d'autorisation parmi les deux unités d'autorisation étant configurée pour
à chaque cycle de calcul,
.- déterminer un mode d'activité du i-ème centre de calcul dans le système SBAS parmi un mode maître et un mode de secours,
. le mode maître autorisant l'unique centre de calcul (CPF#m) mis dans ce mode parmi les deux centres de calcul à émettre les flux de données NOF m.j générés aux N stations sol de diffusions NLES# j, j variant de 1 à N,
. le mode de secours interdisant au centre de calcul mis dans ce mode à transmettre ses flux de données aux stations sol de diffusion mais autorisant ledit centre de calcul à basculer en mode maître lorsqu'une panne persistante sur le centre de calcul actuellement en mode maitre a été détectée ;
le mode d'activité du i-ème centre de calcul étant déterminé en fonction
.* de la connaissance du centre de calcul actuellement en mode maître et en train d'émettre vers les stations de diffusion ;
.* de la connaissance régulière des états de fonctionnement en termes d'absence ou d'existence de pannes des centres de calcul des sites distants et de leur mode d'activité ; et
.* de la qualité de réception des messages transmis aux stations de diffusion ; et
.* de la qualité des messages réellement émis par les moyens de diffusion spatiaux ou aéronautiques et reçu par le récepteur radioélectrique correspondant à l'unité d'autorisation ; et
.- en fonction du mode d'activité déterminé, soit rester dans le mode d'activité précédent si le mode d'activité déterminé lui est identique, soit basculer dans le mode d'activité déterminé s'il est différent du mode d'activité précédent ;
.- en fonction du mode d'activité déterminé, autoriser ou interdire le i-ème centre de calcul d'émettre ses flux de données vers les N stations au sol de diffusion.

8. Système d'augmentation spatial ou aéronautique selon l'une quelconque des revendications 1 à 6, dans lequel
Le nombre K de centres de calcul est supérieur ou égal à 3 ; et
Pour i variant de 1 à K, chaque i-ème centre de calcul CPF# i comporte Un i-ème récepteur radioélectrique (172, 174, 176), localisé sur le i-ème site associé au i-ième centre de calcul (132, 134, 136), et
Une i-ème unité d'autorisation (182, 184, 186) du i-ème centre de calcul (132, 134, 136) à transmettre les N flux de donnés NOF i.j suivant l'indice j aux N stations au sol de diffusion (NLES# j) ; et
chaque i-ème unité d'autorisation (182, 184, 186) parmi les K unités d'autorisation étant configurée pour
à chaque cycle de calcul,
.- déterminer un mode d'activité du i-ème centre de calcul dans le système SBAS parmi un unique mode maître, un mode de premier secours, et un mode de secours de réserve,
. le mode maître autorisant l'unique centre de calcul (CPF#m) mis dans ce mode parmi les K centres de calcul à émettre les flux de données NOF m.j générés aux N stations sol de diffusions NLES# j, j variant de 1 à N,
. le mode de premier secours interdisant au centre de calcul mis dans ce mode à transmettre ses flux de données aux stations sol de diffusion mais autorisant ledit centre de calcul à basculer en mode maître lorsqu'une panne persistante sur le centre de calcul actuellement en mode maitre a été détectée ;
. le mode de secours de réserve interdisant au centre de calcul mis dans ce mode à transmettre ses flux de données aux stations sol de diffusion mais autorisant ledit centre de calcul à basculer en mode de premier secours lorsque une absence de centre de calcul mis en mode de premier secours a été détectée ;
le mode d'activité du i-ème centre de calcul (132, 134, 136) étant déterminé en fonction
*de la connaissance du centre de calcul actuellement en mode maître et en train d'émettre vers les stations de diffusion ; * de la connaissance régulière des états de fonctionnement en termes d'absence ou d'existence de pannes des centres de calcul des sites distants et de leur mode d'activité ; et
* de la qualité de réception des messages transmis aux stations de diffusion ; et
* de la qualité des messages réellement émis par les moyens de diffusion spatiaux ou aéronautiques et reçu par le récepteur radioélectrique correspondant à l'unité d'autorisation ; et
.- en fonction du mode d'activité déterminé, soit rester dans le mode d'activité précédent si le mode d'activité déterminé lui est identique, soit basculer dans le mode d'activité déterminé s'il est différent du mode d'activité précédent ;
.- en fonction du mode d'activité déterminé, autoriser ou interdire le i-ème centre de calcul d'émettre ses flux de données vers les N stations au sol de diffusion.

9. Système d'augmentation spatial ou aéronautique selon l'une quelconque des revendications 7 à 8, dans lequel
chaque i-ème unité d'autorisation (182, 184, 186) est configurée pour contrôler la bonne réception de messages de retour envoyés par les stations au sol de diffusion accusant réception des messages transmis par l'unité d'autorisation au travers du troisième réseau de communications (148); et contrôler les états de fonctionnement des centre de calculs des sites distants et leur mode d'activité au travers du premier réseau de communications (140) ; et
contrôler les messages réellement diffusés par les moyens de diffusion spatiaux ou aéronautiques pour confirmer ou non une absence de répétitivité d'une panne de liaison.

10. Système d'augmentation spatial ou aéronautique selon l'une quelconque des revendications 1 à 9, dans lequel
pour i variant de 1 à K, chaque i-ème centre de calcul (132, 134, 136) comporte en outre
au moins une i-ème unité de traitement et de création (192, 194, 196) de flux de messages de navigation NOF i.j et au moins une i-ème unité de vérification de l'intégrité des flux de messages de navigation NOF i.j, variant de 1 à N ;
le i-ème centre de calcul (132, 134, 136) étant autorisé à émettre les flux de messages lorsque les vérifications d'intégrité ont réussies.

11. Procédé de gestion de flux de données de navigation d'un système d'augmentation spatial ou aéronautique (102) adapté pour améliorer la précision et la fiabilité des données délivrées par un système de navigation par satellites (104),
Le système d'augmentation spatial ou aéronautique (102) comprenant :
.- un segment spatial ou aéronautique (106) ayant un premier nombre entier N, supérieur ou égal deux, de moyens de diffusion spatiaux ou aéronautiques (GEO#j), munis respectivement de leurs moyens d'émission/réception adaptés pour émettre des données reçues de stations au sol de diffusion associées (NLES#j), à destination d'une même zone géographique prédéterminée ;
.- un segment sol d'infrastructure (108) comportant
.- N stations au sol de transmission (NLES#j), associées respectivement aux N moyens de diffusion spatiaux ou aéronautiques (GEO#j) pour leur transmettre des données de navigation et numérotées respectivement par un premier indice entier j variant de 1 à N, et
.- au moins une station au sol d'observation et de réception (130) de signaux transmis par au moins un satellite du système de navigation global de satellites (104) et par les N moyens de diffusion spatiaux ou aéronautiques (GEO#j),
.- un deuxième nombre K, supérieur ou égal à 2, de centres de calcul (CPF#i) en redondance, numérotés respectivement par un deuxième indice i variant de 1 à K, et configurés pour calculer, à partir des signaux transmis par la ou les stations au sol d'observation et de réception (130), des flux ou séquences de messages de navigation de trames augmentées de navigation NOF i.j, i variant de 1 à K et j variant de 1 à N, prêts à être transmis respectivement suivant l'indice j aux N stations au sol de diffusion (NLES#j) ;
au moins deux des K centres de calcul (CPF#i) étant localisés respectivement sur des sites géographiquement distants entre eux et reliés par un premier réseau de communications (140),
l'au moins une station au sol de réception et d'observation (130), les N stations au sol de diffusion (NLES#j) respectivement, étant connectés aux K centres de calcul (CPF#i) par un deuxième réseau de communications (144) et un troisième réseau de communications (148),
le procédé de gestion de flux de messages de navigation comprenant une première étape (304) dans laquelle les K centres de calcul (CPF#i), i variant de 1 à K, élaborent chacun séparément une suite de N flux parallèles de messages de navigation NOF i.j, j variant de 1 à N, et la suite de tous les flux de données NOF i.j, indépendamment du centre de calcul (CPF#i) qui les élaborent, comporte une même séquence (MTs) de types MTs de messages, indépendante des moyens de diffusion spatiaux ou aéronautiques, les types MTs de messages de la séquence étant compris dans un ensemble prédéterminé {Tm} de types Tm de contenus de message de navigation ;
le procédé de gestion de flux de messages de navigation étant **caractérisé en ce que** :
les contenus de deux flux de données NOF i.j1, NOF i.j2, élaborés en parallèle par un même centre de calcul CPF i quelconque et destinées à deux moyens de diffusion spatiaux ou aéronautiques différents (j1≠j2), diffèrent seulement par le contenu des messages d'un premier type concernant des données d'éphémérides d'un ou plusieurs moyens de diffusion spatiaux ou aéronautiques, et/ou par le contenu des messages d'un deuxième type concernant des données de navigation d'un moyen de diffusion spatial ou aéronautique plus précises que les données d'éphémérides fournies par les messages du premier type.

12. Procédé de gestion de flux de messages de navigation d'un système d'augmentation spatial ou aéronautique (102) selon la revendication 11, dans lequel
pour i variant de 1 à K , chaque i-ème centre de calcul CPF i comporte un i-ème récepteur radioélectrique, localisé sur le i-ème site associé au i-ième centre de calcul, et
Une i-ème unité d'autorisation du i-ème centre de calcul à transmettre les N flux de donnés NOF i.j suivant l'indice j aux N stations au sol de diffusion NLES j ;
le procédé comprenant en outre
.- une deuxième étape (306) dans laquelle chaque i-ème unité d'autorisation détermine dans la phase de calcul actuelle un mode d'activité actuel dans le système d'augmentation (102) parmi un unique mode maître et un mode de r secours,
. le mode maître autorisant l'unique centre de calcul CPFm mis dans ce mode parmi les K centres de calcul à émettre les flux de données NOF m.j générés aux N stations sol de diffusions NLES j,
. le mode de secours interdisant au centre de calcul mis dans ce mode à transmettre ses flux de données aux stations sol de diffusion mais autorisant ledit centre de calcul à basculer en mode maître de manière coordonnée avec d'autres centres de calcul le cas échéant lorsqu'une panne persistante sur le centre de calcul actuellement en mode maitre a été détectée ;
le mode d'activité du i-ème centre de calcul étant déterminé en fonction
.* de la connaissance du centre de calcul actuellement en mode maître et en train d'émettre vers les stations de diffusion ;
.* de la connaissance régulière des états de fonctionnement en termes d'absence ou d'existence de pannes des centres de calcul des sites distants et de leur mode d'activité ; et
.* de la qualité de réception des messages transmis aux stations sol de diffusion; et
.* de la qualité des messages réellement émis par les moyens de diffusion spatiaux ou aéronautiques et reçu par le récepteur radioélectrique correspondant à l'unité d'autorisation ; et
.- une troisième étape (308) dans laquelle, pour i variant de 1 à K, en fonction du mode d'activité déterminé, la i-ème unité d'autorisation reste dans le mode d'activité précédent si le mode d'activité déterminé lui est identique, soit bascule dans le mode d'activité déterminé s'il est différent du mode d'activité précédent ; et
.- une quatrième étape (310), dans laquelle pour i variant de 1 à K, en fonction du mode d'activité déterminé, la i-ème unité d'autorisation autorise ou interdit le i-ème centre de calcul d'émettre ses flux de données vers les N stations au sol de diffusion.

13. Procédé de gestion de flux de messages de navigation d'un système d'augmentation spatial ou aéronautique (102) selon la revendication 12, dans lequel la deuxième étape (306) de détermination du mode d'activité comporte des cinquième, sixième, septième étapes (322, 324, 326),
chaque i-ème unité d'autorisation contrôlant dans la cinquième étape (322) la bonne réception de messages de retour envoyés par les stations au sol de diffusion (NLES#j) accusant réception des messages transmis par la i-ème unité d'autorisation au travers du troisième réseau de communications (148); et
chaque i-ème unité d'autorisation contrôlant si nécessaire dans la sixième étape (324) les états de fonctionnement des centres de calcul des sites distants et leur mode d'activité au travers de messages de maintenance en provenance des unités d'autorisation distantes ; et
chaque i-ème unité d'autorisation contrôlant si nécessaire dans la septième étape (326) les messages réellement diffusés par les moyens de diffusion spatiaux ou aéronautiques pour confirmer ou non une absence de répétitivité d'une panne.

## Patentansprüche

1. Raum- oder luftfahrttechnisches Erweiterungssystem, ausgelegt zum Verbessern der Genauigkeit und Zuverlässigkeit von von einem globalen Satellitennavigationssystem (104) gelieferten Daten, das Folgendes umfasst:
.- ein raum- oder luftfahrttechnisches Segment (106) mit einer ersten ganzen Zahl N, gleich oder größer als zwei von raum- oder luftfahrttechnischen Rundfunkmitteln (GEO#j), jeweils ausgestattet mit ihren Sende-/Empfangsmitteln, ausgelegt zum Senden von jeweils von assoziierten Rundfunk-Bodenstationen (NLES#j) empfangenen Daten in dieselbe vorbestimmte geografische Zone;
.- ein Infrastrukturbodensegment (108), das Folgendes umfasst:
.- N Rundfunk-Bodenstationen (122, 124, 126, NLES#j), jeweils assoziiert mit den N raum- oder luftfahrttechnischen Rundfunkmitteln (GEO#j), um Navigationsdaten dorthin zu senden, die jeweils mit einem ersten ganzzahligen Index j, der zwischen 1 und N variiert, nummeriert sind, und
.- wenigstens eine Beobachtungs- und Empfangs-Bodenstation (130) für Signale, die von wenigstens einem Satelliten des globalen Satellitennavigationssystems (104) und von den N raum- oder luftfahrttechnischen Rundfunkmitteln (GEO#j) übertragen wurden,
.- eine zweite Anzahl K, gleich oder größer als 2, von Rechenzentren (132, 134, 136, CPF#i), wechselseitig redundant, die jeweils mit einem zweiten Index i, der zwischen 1 und K variiert, nummeriert und zum Berechnen, auf der Basis der von der oder den Beobachtungs- und Empfangs-Bodenstation(en) (130) übertragenen Signale, von Flüssen oder Folgen von Navigationsnachrichten von erweiterten Navigations-Frames NOF i.j konfiguriert sind, wobei i zwischen 1 und K variiert und j zwischen 1 und N variiert, die zur Übertragung jeweils gemäß dem Index j zu den N Rundfunk-Bodenstationen (NLES#j) bereit sind;
wobei sich wenigstens zwei der K Rechenzentren (132, 134, 136, CPF#i) jeweils an geografisch voneinander entfernten Orten befinden und durch ein erstes Kommunikationsnetz (140) verbunden sind,
wobei die wenigstens eine Beobachtungs- und Empfangs-Bodenstation (130), die N Rundfunk-Bodenstationen (NLES# j) mit den K Rechenzentren (CPF#i) jeweils durch ein zweites Kommunikationsnetzwerk (144) und ein drittes Kommunikationsnetzwerk (148) verbunden sind,
wobei die K Rechenzentren (CPF#i) jeweils zum Erstellen eines Satzes von N i-ten parallelen Nachrichtenflüssen NOF i.j konfiguriert sind, wobei j von 1 bis N variiert, so dass der Satz aller Nachrichtenflüsse NOF i.j, unabhängig von dem Rechenzentrum (132, 134, 136, CPF#i), das sie gebildet hat, dieselbe zeitliche Folge (MTs) von Nachrichtentypen MTs unabhängig von den raum- oder luftfahrttechnischen Rundfunkmitteln (GEO#j) umfasst, wobei die Nachrichtentypen MTs der Folge (MTs) in einer vorbestimmten Gruppe {Tm} von Navigationsnachrichteninhaltstypen Tm enthalten sind;
wobei das raum- oder luftfahrttechnische Erweiterungssystem **dadurch gekennzeichnet ist, dass**:
jedes Rechenzentrum CPF#i so konfiguriert ist, dass sich die Inhalte von N Datenflüssen NOF i.j, die das Rechenzentrum CPF#i erzeugt, nur nach dem Nachrichteninhalt unterscheiden, von dem die ein oder mehreren Inhaltstypen die vorhergesagten oder kürzlich gemessenen Bahnen von N raum- oder luftfahrttechnischen Rundfunkmitteln betreffen.

2. Raum- oder luftfahrttechnisches Erweiterungssystem, ausgelegt zum Verbessern der Genauigkeit und Zuverlässigkeit von von einem globalen Satellitennavigationssystem (104) gelieferten Daten, das Folgendes umfasst:
.- ein raum- oder luftfahrttechnisches Segment (106) mit einer ersten ganzen Zahl N, gleich oder größer als zwei, von raum- oder luftfahrttechnischen Rundfunkmitteln (GEO#j), jeweils ausgestattet mit ihren Sende-/Empfangsmitteln, ausgelegt zum Senden von jeweils von assoziierten Rundfunk-Bodenstationen (NLES#j) empfangenen Daten in dieselbe vorbestimmte geografische Zone;
.- ein Infrastrukturbodensegment (108), das Folgendes umfasst:
.- N Rundfunk-Bodenstationen (122, 124, 126, NLES#j), jeweils assoziiert mit den N raum- oder luftfahrttechnischen Rundfunkmitteln (GEO#j), um Navigationsdaten dorthin zu senden, die jeweils mit einem ersten ganzzahligen Index j, der zwischen 1 und N variiert, nummeriert sind, und
.- wenigstens eine Beobachtungs- und Empfangs-Bodenstation (130) für Signale, die von wenigstens einem Satelliten des globalen Satellitennavigationssystems (104) und von den N raum- oder luftfahrttechnischen Rundfunkmitteln (GEO#j) übertragen wurden,
.- eine zweite Anzahl K, gleich oder größer als 2, von Rechenzentren (132, 134, 136, CPF#i), wechselseitig redundant, die jeweils mit einem zweiten Index i, der zwischen 1 und K variiert, nummeriert und zum Berechnen, auf der Basis der von der oder den Beobachtungs- und Empfangs-Bodenstation(en) (130) übertragenen Signale, von Flüssen oder Folgen von Navigationsnachrichten von erweiterten Navigations-Frames NOF i.j konfiguriert sind, wobei i zwischen 1 und K variiert und j zwischen 1 und N variiert, die zur Übertragung jeweils gemäß dem Index j zu den N Rundfunk-Bodenstationen (NLES#j) bereit sind;
wobei sich wenigstens zwei der K Rechenzentren (132, 134, 136, CPF#i) jeweils an geografisch voneinander entfernten Orten befinden und durch ein erstes Kommunikationsnetz (140) verbunden sind,
wobei die wenigstens eine Beobachtungs- und Empfangs-Bodenstation (130), die N Rundfunk-Bodenstationen (NLES# j) mit den K Rechenzentren (CPF#i) jeweils durch ein zweites Kommunikationsnetzwerk (144) und ein drittes Kommunikationsnetzwerk (148) verbunden sind;
wobei die K Rechenzentren (CPF#i) jeweils zum Erstellen eines Satzes von N i-ten parallelen Nachrichtenflüssen NOF i.j konfiguriert sind, wobei j von 1 bis N variiert, so dass der Satz aller Nachrichtenflüsse NOF i.j, unabhängig von dem Rechenzentrum (132, 134, 136, CPF#i), das sie gebildet hat, dieselbe zeitliche Folge (MTs) von Nachrichtentypen MTs unabhängig von den raum- oder luftfahrttechnischen Rundfunkmitteln (GEO#j) umfasst, wobei die Nachrichtentypen MTs der Folge (MTs) in einer vorbestimmten Gruppe {Tm} von Navigationsnachrichteninhaltstypen Tm enthalten sind;
wobei das raum- oder luftfahrttechnische Erweiterungssystem **dadurch gekennzeichnet ist, dass**:
jedes Rechenzentrum CPF#i so konfiguriert ist, dass alle Datenflüsse, die es erzeugt, denselben Algorithmus gemeinsam nutzen, implementiert für die Verarbeitung von von wenigstens einer Beobachtungs- und Empfangs-Bodenstation (130) empfangenen GNSS- und SBAS-Daten und zum Erstellen aller Datenflüsse im Hinblick auf die gleiche Terminierung von Nachrichtentypen und von denselben Inhalten einer Mehrheit von Nachrichten, unter Ausschluss von Nachrichten eines ersten Typs, die Ephemeridendaten von einem oder mehreren raum- oder luftfahrttechnischen Rundfunkmitteln betreffen, und/oder von Nachrichten eines zweiten Typs, die Navigationsdaten eines raum- oder luftfahrttechnischen Rundfunkmittels betreffen, die genauer sind als die von den Nachrichten des ersten Typs gelieferten Ephemeridendaten.

3. Raum- oder luftfahrttechnisches Erweiterungssystem nach Anspruch 1 oder Anspruch 2, bei dem die K Rechenzentren so konfiguriert sind, dass in jedem aktuellen Rechenzyklus von Nachrichten ein einziges Rechenzentrum (CPF#m) aus den K Rechenzentren (CPF#i) ausgewählt und autorisiert wird, die aktuellen Nachrichten NOF m.j zu den Rundfunk-Bodenstationen (NLES#j) zu übertragen, wobei m den Index des im aktuellen Rechenzentrum gewählten Rechenzyklus (CPF#m) bezeichnet, und wobei das gewählte Rechenzentrum (CPF#m) als das Hauptrechenzentrum des Verstärkungssystems während des aktuellen Zyklus angesehen wird.

4. Räumliches SBAS-Erweiterungssystem nach einem der Ansprüche 1 bis 3, in dem
jedes Rechenzentrum CPF#i so konfiguriert ist, dass die Inhalte von zwei Datenflüssen NOF i.j1, NOF i.j2, die das Rechenzentrum CPF#i parallel erstellt und die für zwei verschiedene raum- oder luftfahrttechnische Rundfunkmittel (j1≠j2) bestimmt sind, sich nur durch den Inhalt der Nachrichten eines ersten Typs in Bezug auf Ephemeridendaten von einem oder mehreren raum- oder luftfahrttechnischen Rundfunkmitteln und/oder durch den Inhalt von Nachrichten eines zweiten Typs in Bezug auf Navigationsdaten eines raum- oder luftfahrttechnischen Rundfunkmittels unterscheiden, die genauer sind als die von den Nachrichten des ersten Typs gelieferten Ephemeridendaten.

5. Raum- oder luftfahrttechnisches Erweiterungssystem nach Anspruch 4, bei dem die Nachrichten durch ein normatives internationales Dokument RTCA MOPS DO-229-D mit dem Titel "Minimum Operational Performance Standards for Global Positioning System/Wide Area Augmentation Equipment" definiert werden und der erste und zweite Nachrichtentyp jeweils mit "MT17" bzw. "MT9" bezeichnet sind.

6. Raum- oder luftfahrttechnisches Erweiterungssystem nach einem der Ansprüche 1 bis 5, bei dem die raum- oder luftfahrttechnischen Rundfunkmittel in dem Satz enthalten sind, der durch die geostationären GEO-Satelliten, HEO-Satelliten, MEO-Satelliten, LEO-Satelliten, Drohnen, Ballons und Luftfahrzeuge gebildet wird.

7. Raum- oder luftfahrttechnisches Erweiterungssystem nach einem der Ansprüche 1 bis 6, bei dem:
die zweite Zahl K von Rechenzentren gleich 2 ist; und
wenn i von 1 bis 2 variiert, jedes i-te Rechenzentrum CPF#i einen i-ten Funkempfänger umfasst, der sich an dem mit dem i-ten Rechenzentrum assoziierten i-ten Ort befindet, und
eine i-te Autorisierungseinheit des i-ten Rechenzentrums zum Übertragen der N Datenflüsse NOF i.j gemäß dem Index j zu den N Rundfunk-Bodenstationen (NLES# j); und
jede i-te Autorisierungseinheit unter den beiden Autorisierungseinheiten in jedem Rechenzyklus konfiguriert ist zum:
.- Bestimmen eines Aktivitätsmodus des i-ten Rechenzentrums in dem SBAS-System unter einem Hauptmodus und einem Erste-Hilfe-Modus,
. wobei der Hauptmodus es zulässt, dass das einzige in diesen Modus versetzte Rechenzentrum (CPF#m) unter den beiden Rechenzentren die Datenflüsse NOF m.j sendet, die an den N Rundfunk-Bodenstationen NLES# j erzeugt werden, wobei j von 1 bis N variiert,
. wobei der Erste-Hilfe-Modus es nicht zulässt, dass das in diesen Modus versetzte Rechenzentrum seine Datenflüsse zu den Rundfunk-Bodenstationen überträgt, es aber zulässt, dass das Rechenzentrum in den Hauptmodus schaltet, wenn eine Störung an dem derzeit im Hauptmodus befindlichen Rechenzentrum erkannt wird;
wobei der Aktivitätsmodus des i-ten Rechenzentrums in Abhängigkeit von Folgendem bestimmt wird:
. ∗ der Kenntnis des aktuell im Hauptmodus befindlichen Rechenzentrums, das gerade zu den Rundfunkstationen sendet;
. ∗ der regelmäßigen Kenntnis der Betriebszustände im Hinblick auf An- oder Abwesenheit von Störungen der Rechenzentren der entfernten Orte und ihres Aktivitätsmodus; und
. ∗ der Empfangsqualität der zu den Rundfunkstationen übertragenen Nachrichten; und
. ∗ der Qualität der tatsächlich von den raum- oder luftfahrttechnischen Rundfunkmitteln gesendeten und vom Funkempfänger entsprechend der Autorisierungseinheit empfangenen Nachrichten; und
.- in Abhängigkeit von dem bestimmten Aktivitätsmodus, entweder Bleiben im vorherigen Aktivitätsmodus, wenn der bestimmte Aktivitätsmodus damit identisch ist, oder Umschalten in den bestimmten Aktivitätsmodus, wenn er sich vom vorherigen Aktivitätsmodus unterscheidet;
.- in Abhängigkeit von dem bestimmten Aktivitätsmodus, Zulassen oder Nichtzulassen, dass das i-te Rechenzentrum seine Datenflüsse zu den N Rundfunk-Bodenstationen sendet.

8. Raum- oder luftfahrttechnisches Erweiterungssystem nach einem der Ansprüche 1 bis 6, bei dem:
die Anzahl K von Rechenzentren gleich oder größer als 3 ist; und
wenn i von 1 bis K variiert, jedes i-te Rechenzentrum CPF# i einen i-ten Funkempfänger (172, 174, 176) umfasst, der sich an dem mit dem i-ten Rechenzentrum (132, 134, 136) assoziierten i-ten Ort befindet, und
eine i-te Autorisierungseinheit (182, 184, 186) des i-ten Rechenzentrums (132, 134, 136), die N Datenflüsse NOF i.j gemäß dem Index j zu den N Rundfunk-Bodenstationen (NLES# j) zu übertragen; und
jede i-te Autorisierungseinheit (182, 184, 186) unter den K Autorisierungseinheiten so konfiguriert ist, dass sie in jedem Rechenzyklus:
.- einen Aktivitätsmodus des i-ten Rechenzentrums im SBAS-System unter einem einzigen Hauptmodus, einem ersten Erste-Hilfe-Modus und einem Reserve-Hilfe-Modus bestimmt,
. der Hauptmodus es zulässt, dass das einzige in diesen Modus versetzte Rechenzentrum (CPF#m) unter den K Rechenzentren die erzeugten Datenflüsse NOF m.j zu den N Rundfunk-Bodenstationen NLES# j sendet, wobei j von 1 bis N variiert,
. der Erste-Hilfe-Modus es nicht zulässt, dass das in diesen Modus versetzte Rechenzentrum seine Datenflüsse zu den Rundfunk-Bodenstationen sendet, es aber zulässt, dass das Rechenzentrum in den Hauptmodus schaltet, wenn eine anhaltende Störung in dem aktuell im Hauptmodus befindlichen Rechenzentrum erkannt wurde;
. der Reserve-Hilfe-Modus es nicht zulässt, dass das in diesen Modus versetzte Rechenzentrum seine Datenflüsse zu den Rundfunk-Bodenstationen überträgt, es aber zulässt, dass das Rechenzentrum in den ersten Erste-Hilfe-Modus umschaltet, wenn eine Abwesenheit eines in den ersten Erste-Hilfe-Modus versetzten Rechenzentrums erkannt wurde;
der Aktivitätsmodus des i-ten Rechenzentrums (132, 134, 136) bestimmt wird in Abhängigkeit von:
.∗ der Kenntnis des aktuell im Hauptmodus befindlichen Rechenzentrums, das gerade zu den Rundfunkstationen sendet;
.∗ der regelmäßigen Kenntnis der Betriebszustände im Sinne der An- oder Abwesenheit von Störungen von Rechenzentren von entfernten Orten und deren Aktivitätsmodus; und
.∗ der Empfangsqualität der zu den Rundfunkstationen übertragenen Nachrichten; und
.∗ der Qualität von tatsächlich von den raum- oder luftfahrttechnischen Rundfunkmitteln gesendeten und von dem Funkempfänger entsprechend der Autorisierungseinheit empfangenen Nachrichten; und
.- in Abhängigkeit von dem bestimmten Aktivitätsmodus, entweder Verbleiben im vorherigen Aktivitätsmodus, wenn der bestimmte Aktivitätsmodus damit identisch ist, oder Umschalten in den bestimmten Aktivitätsmodus, wenn er sich von dem vorherigen Aktivitätsmodus unterscheidet;
.- in Abhängigkeit von dem bestimmten Aktivitätsmodus, Zulassen oder Nichtzulassen, dass das i-te Rechenzentrum seine Datenflüsse zu den N Rundfunk-Bodenstationen sendet.

9. Raum- oder luftfahrttechnisches Erweiterungssystem nach einem der Ansprüche 7 bis 8, bei dem:
jede i-te Autorisierungseinheit (182, 184, 186) zum Kontrollieren des korrekten Empfangs von von den Rundfunk-Bodenstationen gesendeten Rückmeldungen konfiguriert ist, die den Empfang von von der Autorisierungseinheit übertragenen Nachrichten durch das dritte Kommunikationsnetzwerk (148) bestätigen; und
Kontrollieren der Betriebszustände der Rechenzentren der entfernten Orte und ihres Aktivitätsmodus durch das erste Kommunikationsnetzwerk (140); und
Kontrollieren der tatsächlich von den raum- oder luftfahrttechnischen Rundfunkmitteln rundgesendeten Nachrichten, um die Nichtwiederholbarkeit einer Verbindungsstörung zu bestätigen oder nicht.

10. Raum- oder luftfahrttechnisches Erweiterungssystem nach einem der Ansprüche 1 bis 9, bei dem:
wenn i von 1 bis K variiert, jedes i-te Rechenzentrum (132, 134, 136) ferner Folgendes umfasst:
wenigstens eine i-te Verarbeitungs- und Erzeugungseinheit (192, 194, 196) für Navigationsnachrichtenflüsse NOF i.j und wenigstens eine i-te Verifizierungseinheit für die Integrität der Navigationsnachrichtenflüsse NOF i.j, die zwischen 1 bis N variieren;
wobei das i-te Rechenzentrum (132, 134, 136) zum Senden der Nachrichtenflüsse autorisiert ist, wenn die Integritätsverifikationen erfolgreich sind.

11. Verfahren zum Verwalten von Navigationsdatenflüssen eines raum- oder luftfahrttechnischen Erweiterungssystems (102), ausgelegt zum Verbessern der Genauigkeit und Zuverlässigkeit von von einem Satellitennavigationssystem (104) gelieferten Daten,
wobei das raum- oder luftfahrttechnische Erweiterungssystem (102) Folgendes umfasst:
.- ein raum- oder luftfahrttechnisches Segment (106) mit einer ersten ganzen Zahl N, gleich oder größer als zwei, von raum- oder luftfahrttechnischen Rundfunkmitteln (GEO#j), jeweils ausgestattet mit ihren Sende-/Empfangsmitteln, ausgelegt zum Senden von von den assoziierten Rundfunk-Bodenstationen (NLES#j) empfangenen Daten in dieselbe vorbestimmte geografische Zone;
.- ein Bodeninfrastruktursegment (108), das Folgendes umfasst:
.- N Übertragungsbodenstationen (NLES#j), die jeweils mit den N raum- oder luftfahrttechnischen Rundfunkmitteln (GEO#j) assoziiert sind, um Navigationsdaten dorthin zu übertragen, und die jeweils durch einen ersten ganzzahligen Index j nummeriert sind, der von 1 bis N variiert, und
.- wenigstens eine Beobachtungs- und Empfangs-Bodenstation (130) für Signale, die von wenigstens einem globalen Satellitennavigationssystem (104) und den N raum- oder luftfahrttechnischen Rundfunkmitteln (GEO#j) übertragen werden,
.- eine zweite Anzahl K, gleich oder größer als 2, von redundanten Rechenzentren (CPF#i), die jeweils durch einen zweiten Index i nummeriert sind, der von 1 bis K variiert, und konfiguriert zum Berechnen, auf der Basis der von den ein oder mehreren Beobachtungs- und Empfangs-Bodenstationen (130) übertragenen Signale, von Flüssen oder Folgen von Navigationsnachrichten von erweiterten Navigations-Frames NOF i.j, wobei i von 1 bis K variiert und j von 1 bis N variiert, die jeweils zum Übertragen gemäß dem Index j zu den N Rundfunk-Bodenstationen (NLES#j) bereit sind;
wobei sich wenigstens zwei der K Rechenzentren (CPF#i) jeweils an geografisch voneinander entfernten Orten befinden und durch ein erstes Kommunikationsnetzwerk (140) verbunden sind,
wobei die wenigstens eine Beobachtungs- und Empfangs-Bodenstation (130), die N Rundfunk-Bodenstationen (NLES#j) jeweils mit den K Rechenzentren (CPF#i) durch ein zweites Kommunikationsnetzwerk (144) und ein drittes Kommunikationsnetzwerk (148) verbunden sind,
wobei das Verfahren zum Verwalten von Navigationsnachrichtenflüssen einen ersten Schritt (304) beinhaltet, in dem die K Rechenzentren (CPF#i), wobei i von 1 bis K variiert, jeweils separat einen Satz von N parallelen Navigationsnachrichtenflüssen NOF i.j erstellen, wobei j von 1 bis N variiert, und die Folge aller Datenflüsse NOF i.j, unabhängig vom Rechenzentrum (CPF#i), das sie erstellt, dieselbe Folge (MTs) von Nachrichtentypen MTs unabhängig von den raum- oder luftfahrttechnischen Rundfunkmitteln umfasst, wobei die Nachrichtentypen MTs der Folge in einer vorbestimmten Gruppe {Tm} von Navigationsnachrichteninhaltstypen Tm enthalten sind;
wobei das Verfahren zum Verwalten von Navigationsnachrichtenflüssen **dadurch gekennzeichnet ist, dass**:
die Inhalte von zwei Datenflüssen NOF i.j1, NOF i.j2, parallel erstellt durch dasselbe beliebige Rechenzentrum CPF i und bestimmt für zwei verschiedene raum- oder luftfahrttechnische Rundfunkmittel (j1≠j2) die sich nur nach dem Inhalt von Nachrichten eines ersten Typs in Bezug auf Ephemeridendaten von einem oder mehreren raum- oder luftfahrttechnischen Rundfunkmitteln und/oder durch den Inhalt von Nachrichten eines zweiten Typs in Bezug auf Navigationsdaten eines raum- oder luftfahrttechnischen Rundfunkmittels unterscheiden, die genauer sind als die von den Nachrichten des ersten Typs gelieferten Ephemeridendaten.

12. Verfahren zum Verwalten von Navigationsnachrichtenflüssen eines raum- oder luftfahrttechnischen Erweiterungssystems (102) nach Anspruch 11, bei dem:
wenn i von 1 bis K variiert, jedes i-te Rechenzentrum CPF i einen i-ten Funkempfänger umfasst, der sich an dem mit dem i-ten Rechenzentrum assoziierten i-ten Ort befindet, und
eine i-te Autorisierungseinheit des i-ten Rechenzentrums zum Übertragen der N Datenflüsse NOF i.j gemäß dem Index j zu den N Rundfunk-Bodenstationen NLES j;
wobei das Verfahren ferner Folgendes beinhaltet:
.- einen zweiten Schritt (306), in dem jede i-te Autorisierungseinheit in der aktuellen Rechenphase einen aktuellen Aktivitätsmodus in dem Erweiterungssystem (102) unter einem einzigen Hauptmodus und einem Erste-Hilfe-Modus bestimmt,
. den Hauptmodus, der es zulässt, dass das einzige in diesen Modus versetzte Rechenzentrum CPFm unter den K Rechenzentren die erzeugten Datenflüsse NOF m.j zu den N Rundfunk-Bodenstationen NLES j sendet,
. den Erste-Hilfe-Modus, der es nicht zulässt, dass das in diesen Modus versetzte Rechenzentrum seine Datenflüsse zu den Rundfunk-Bodenstationen überträgt, es aber zulässt, dass das Rechenzentrum ggf. auf mit anderen Rechenzentren koordinierte Weise in den Hauptmodus umschaltet, wenn eine anhaltende Störung in dem aktuell im Hauptmodus befindlichen Rechenzentrum erkannt wurde;
wobei der Aktivitätsmodus des i-ten Rechenzentrums in Abhängigkeit von Folgendem bestimmt wird:
.∗ der Kenntnis des aktuell im Hauptmodus befindlichen Rechenzentrums, das gerade zu den Rundfunkstationen sendet;
.∗ der regelmäßigen Kenntnis der Betriebszustände im Sinne der An- oder Abwesenheit von Störungen der Rechenzentren der entfernten Orte und ihres Aktivitätsmodus; und
.∗ der Empfangsqualität der zu den Rundfunk-Bodenstationen übertragenen Nachrichten; und
.∗ der Qualität von von den raum- oder luftfahrttechnischen Rundfunkmitteln tatsächlich gesendeten und vom Funkempfänger entsprechend der Autorisierungseinheit empfangenen Nachrichten; und
.- einen dritten Schritt (308), in dem, wenn i von 1 bis K variiert, in Abhängigkeit von dem bestimmten Aktivitätsmodus, die i-te Autorisierungseinheit im vorherigen Aktivitätsmodus bleibt, wenn der bestimmte Aktivitätsmodus damit identisch ist, oder in den bestimmten Aktivitätsmodus umschaltet, wenn er sich vom vorherigen Aktivitätsmodus unterscheidet; und
.- einen vierten Schritt (310), in dem, wenn i von 1 bis K variiert, in Abhängigkeit vom bestimmten Aktivitätsmodus, die i-te Autorisierungseinheit es zulässt oder nicht zulässt, dass das i-te Rechenzentrum seine Datenflüsse zu den N Rundfunk-Bodenstationen sendet.

13. Verfahren zum Verwalten von Navigationsnachrichtenflüssen eines raum- oder luftfahrttechnischen Verstärkungssystems (102) nach Anspruch 12, bei dem der zweite Schritt (306) des Bestimmens des Aktivitätsmodus einen fünften, sechsten, siebten Schritt (322, 324, 326) beinhaltet,
wobei jede i-te Autorisierungseinheit im fünften Schritt (322) den korrekten Empfang von Rückmeldungen kontrolliert, die von den Rundfunk-Bodenstationen (NLES#j) gesendet werden, und den Empfang der von der i-ten Autorisierungseinheit durch das dritte Kommunikationsnetzwerk (148) übertragenen Nachrichten bestätigt; und
wobei jede i-te Autorisierungseinheit falls nötig im sechsten Schritt (324) die Betriebszustände der Rechenzentren der entfernten Orte und deren Aktivitätsmodus durch von den entfernten Autorisierungseinheiten kommende Wartungsnachrichten kontrolliert; und
wobei jede i-te Autorisierungseinheit falls nötig im siebten Schritt (326) die tatsächlich von den raum- oder luftfahrttechnischen Rundfunkmitteln rundgesendeten Nachrichten kontrolliert, um die Nichtwiederholbarkeit einer Störung zu bestätigen oder nicht.

## Claims

1. A space-based or aeronautical augmentation system, adapted to improve the precision and the reliability of data delivered by a global navigation satellite system (104) comprising:
.- a space-based or aeronautical segment (106) having a first integer number N, greater than or equal to two of space-based or aeronautical broadcasting means (GEO#j), respectively provided with their transmission/reception means adapted to transmit data respectively received from associated ground-based broadcasting stations (NLES#j) to the same predetermined geographical area;
.- a ground-based infrastructure segment (108) comprising:
.- N ground-based broadcasting stations (122, 124, 126, NLES#j) respectively associated with N space-based or aeronautical broadcasting means (GEO#j) for transmitting navigation data thereto and respectively numbered by a first integer index j varying from 1 to N; and
.- at least one ground-based station (130) for observing and receiving signals transmitted by at least one satellite of the global navigation satellite system (104) and by the N space-based or aeronautical broadcasting means (GEO#j);
.- a second number K, greater than or equal to 2, of mutually redundant computation centres (132, 134, 136, CPF#i), respectively numbered by a second index i varying from 1 to K, and configured to compute, from the signals transmitted by the one or more ground-based observation and reception station(s) (130), streams or sequences of NOF i.j navigation messages of augmented navigation frames, with i varying from 1 to K and j varying from 1 to N, ready to be respectively transmitted according to the index j to the N ground-based broadcasting stations (NLES#j);
at least two of the K computation centres (132, 134, 136, CPF#i) being respectively located on sites that are geographically remote from each other and are connected by a first communications network (140);
the at least one ground-based reception and observation station (130), the N ground-based broadcasting stations (NLES#j) being connected to the K computation centres (CPF#i) respectively by a second communications network (144) and by a third communications network (148);
the K computation centres (CPF#i) each being configured to establish a sequence of N i-th parallel streams of NOF i.j messages, with j varying from 1 to N, so that the sequence of all the NOF i.j message streams, independently of the computation centre (132, 134, 136, CPF#i) that establishes them, comprises the same time sequence (MTs) of MTs types of messages independent of the space-based or aeronautical broadcasting means (GEO#j), the MTs types of messages of the sequence (MTs) being included in a predetermined set {Tm} of types Tm of navigation message contents;
the space-based or aeronautical augmentation system being **characterised in that**:
each computation centre CPF#i is configured so that the contents of the N streams of NOF i.j data that said computation centre CPF#i generates differ only in the content of messages for which the type(s) of contents relate to the predicted or recently measured trajectories of the N space-based or aeronautical broadcasting means.

2. A space-based or aeronautical augmentation system, adapted to improve the precision and the reliability of data delivered by a global navigation satellite system (104) comprising:
.- a space-based or aeronautical segment (106) having a first integer number N, greater than or equal to two of space-based or aeronautical broadcasting means (GEO#j), respectively provided with their transmission/reception means adapted to transmit data respectively received from associated ground-based broadcasting stations (NLES#j) to the same predetermined geographical area;
.- a ground-based infrastructure segment (108) comprising:
.- N ground-based broadcasting stations (122, 124, 126, NLES#j) respectively associated with N space-based or aeronautical broadcasting means (GEO#j) for transmitting navigation data thereto and respectively numbered by a first integer index j varying from 1 to N; and
.- at least one ground-based station (130) for observing and receiving signals transmitted by at least one satellite of the global navigation satellite system (104) and by the N space-based or aeronautical broadcasting means (GEO#j);
.- a second number K, greater than or equal to 2, of mutually redundant computation centres (132, 134, 136, CPF#i), respectively numbered by a second index i varying from 1 to K, and configured to compute, from the signals transmitted by the one or more ground-based observation and reception station(s) (130), streams or sequences of NOF navigation messages of augmented navigation frames i.j, with i varying from 1 to K and j varying from 1 to N, ready to be respectively transmitted according to the index j to the N ground-based broadcasting stations (NLES#j);
at least two of the K computation centres (132, 134, 136, CPF#i) being respectively located on sites that are geographically remote from each other and are connected by a first communications network (140);
the at least one ground-based reception and observation station (130), the N ground-based broadcasting stations (NLES#j) being connected to the K computation centres (CPF#i) respectively by a second communications network (144) and a third communications network (148);
the K computation centres (CPF#i) each being configured to establish a sequence of N i-th parallel streams of NOF i.j messages, with j varying from 1 to N, so that the sequence of all the streams of NOF i.j messages, independently of the computation centre (132, 134, 136, CPF#i) that establishes them, comprises the same time sequence (MTs) of MTs types of messages independent of the space-based or aeronautical broadcasting means (GEO#j), the MTs types of messages of the sequence (MTs) being included in a predetermined set {Tm} of types Tm of navigation message contents;
the space-based or aeronautical augmentation system being **characterised in that**:
each computation centre CPF#i is configured so that all the data streams that it generates share the same algorithm, implemented for processing GNSS and SBAS data received by the at least one ground-based reception and observation station (130) and for establishing all the data streams acting in the same order of the types of messages and with the same contents of a majority of the messages from which the messages of a first type relating to ephemeral data of one or more space-based or aeronautical broadcasting means are excluded, and/or the messages of a second type relating to navigation data of a space-based or aeronautical broadcasting means that are more precise than the ephemeral data provided by the messages of the first type.

3. The space-based or aeronautical augmentation system as claimed in claim 1 or claim 2, wherein the K computation centres are configured so that, at each current cycle for computing the messages, a single computation centre (CPF#m), taken from the K computation centres (CPF#i), is selected and authorised to transmit the current NOF m.j messages to the ground-based broadcasting stations (NLES#j), with m denoting the index of the computation centre (CPF#m) selected at the current computation cycle and the selected computation centre (CPF#m) being considered to be the master computation centre of the augmentation system during said current computation cycle.

4. The SBAS space-based augmentation system as claimed in any one of claims 1 to 3,wherein each computation centre CPF#i is configured so that the contents of two data streams NOF i.j1, NOF i.j2, which said computation centre CPF#i establishes at the same time and which are intended for two different space-based or aeronautical broadcasting means (j1 ≠ j2), differ only by the content of messages of a first type relating to ephemeral data of one or more space-based or aeronautical broadcasting means, and/or by the content of messages of a second type relating to the navigation data of a space-based or aeronautical broadcasting means that is more precise than the ephemeral data provided by the messages of the first type.

5. The space-based or aeronautical augmentation system as claimed in claim 4, wherein the messages are defined by an international normative document: RTCA MOPS DO-229-D, entitled "Minimum Operational Performance Standards for Global Positioning System/Wide Area Augmentation Equipment", and the first and second types of messages are respectively designated "MT17" and "MT9".

6. The space-based or aeronautical augmentation system as claimed in any one of claims 1 to 5, wherein the space-based or aeronautical broadcasting means are included in the group made up of GEO geostationary satellites, HEO satellites, MEO satellites, LEO satellites, drones, balloons and aircraft.

7. The space-based or aeronautical augmentation system as claimed in any one of claims 1 to 6, wherein the second number K of computation centres is 2 and, for i varying from 1 to 2, each i-th computation centre CPF#i comprises an i-th radio receiver located on the i-th site associated with the i-th computation centre, and an i-th authorisation unit of the i-th computation centre to transmit the N data streams NOF i.j according to the index j to the N ground-based broadcasting stations (NLES#j); and
each i-th authorisation unit from among the two authorisation units is configured, at each computation cycle, to:
.- determine a mode of activity of the i-th computation centre in the SBAS system from among a master mode and a reserve first-aid mode;
. the master mode authorising the single computation centre (CPF#m) placed in this mode from among the two computation centres to transmit the generated data streams NOF m.j to the N ground-based broadcasting stations NLES#j, with j varying from 1 to N;
. the first-aid mode preventing the computation centre placed in this mode to transmit its data streams to the ground-based broadcasting stations but authorising said computation centre to switch to master mode when a persistent failure on the computation centre currently in master mode has been detected;
the mode of activity of the i-th computation centre being determined as a function of:
. * knowledge of the computation centre currently in master mode and transmitting to the broadcasting stations;
. * regular knowledge of the operating states in terms of the absence or the existence of failures in the computation centres of remote sites and of their mode of activity; and
. * the reception quality of the messages transmitted to the broadcasting stations; and
. * the quality of the messages actually transmitted by the space-based or aeronautical broadcasting means and received by the radio receiver corresponding to the authorisation unit; and
.- as a function of the determined mode of activity, either to remain in the previous mode of activity if the determined mode of activity is identical thereto, or to switch to the determined mode of activity if it differs from the previous mode of activity;
.- as a function of the determined mode of activity, the i-th computation centre is authorised to transmit or is prevented from transmitting its data streams to the N ground-based broadcasting stations.

8. The space-based or aeronautical augmentation system as claimed in any one of claims 1 to 6, wherein the number K of computation centres is greater than or equal to 3 and,
for i varying from 1 to K, each i-th computation centre CPF#i comprises an i-th radio receiver (172, 174, 176) located on the i-th site associated with the i-th computation centre (132, 134, 136), and
an i-th authorisation unit (182, 184, 186) of the i-th computation centre (132, 134, 136) to transmit the N data streams NOF i.j according to the index j to the N ground-based broadcasting stations (NLES#j); and
each i-th authorisation unit (182, 184, 186) from among the K authorisation units is configured, at each computation cycle, to:
.- determine a mode of activity of the i-th computation centre in the SBAS system from among a master mode, a first first-aid mode and a reserve first-aid mode;
. the master mode authorising the single computation centre (CPF#m) placed in this mode from among the K computation centres to transmit the generated data streams NOF m.j to the N ground-based broadcasting stations NLES#j, with j varying from 1 to N;
. the first first-aid mode preventing the computation centre placed in this mode to transmit its data streams to the ground-based broadcasting stations but authorising said computation centre to switch to master mode when a persistent failure on the computation centre currently in master mode has been detected;
. the reserve first-aid mode preventing the computation centre placed in this mode from transmitting its data streams to the ground-based broadcasting stations but authorising said computation centre to switch to the first first-aid mode when an absence of a computation centre placed in the first first-aid mode has been detected;
the mode of activity of the i-th computation centre (132, 134, 136) being determined as a function of:
* knowledge of the computation centre currently in master mode and transmitting to the broadcasting stations;
* regular knowledge of the operating states in terms of the absence or the existence of failures in the computation centres of remote sites and of their mode of activity; and
* the reception quality of the messages transmitted to the broadcasting stations; and
* the quality of the messages actually transmitted by the space-based or aeronautical broadcasting means and received by the radio receiver corresponding to the authorisation unit; and
.- as a function of the determined mode of activity, either to remain in the previous mode of activity if the determined mode of activity is identical thereto, or to switch to the determined mode of activity if it differs from the previous mode of activity;
.- as a function of the determined mode of activity, to authorize the i-th computation centre to transmit or to prevent it from transmitting its data streams to the N ground-based broadcasting stations.

9. The space-based or aeronautical augmentation system as claimed in any one of claims 7 to 8, wherein
each i-th authorisation unit (182, 184, 186) is configured to control the proper reception of return messages sent by the ground-based broadcasting stations acknowledging reception of the messages transmitted by the authorisation unit through the third communications network (148); and to control the operating states of the computation centres of the remote sites and their mode of activity through the first communications network (140); and
to control the messages actually broadcast by the space-based or aeronautical broadcasting means for confirming or not confirming a lack of repeatability of a link failure.

10. The space-based or aeronautical augmentation system as claimed in any one of claims 1 to 9, wherein,
for i varying from 1 to K, each i-th computation centre (132, 134, 136) further comprises at least one i-th unit (192, 194, 196) for processing and creating streams of NOF i.j navigation messages and at least one i-th unit for checking the integrity of the streams of NOF i.j navigation messages, varying from 1 to N; the i-th computation centre (132, 134, 136) being authorised to transmit the streams of messages when the integrity checks have succeeded.

11. A method for managing streams of navigation data of a space-based or aeronautical augmentation system (102) adapted to improve the precision and the reliability of data delivered by a satellite navigation system (104), the space-based or aeronautical augmentation system (102) comprising:
.- a space-based or aeronautical segment (106) having a first integer number N, greater than or equal to two, space-based or aeronautical broadcasting means (GEO#j), respectively provided with their transmission/reception means adapted to transmit data respectively received from associated ground-based broadcasting stations (NLES#j) to the same predetermined geographical area;
.- a ground-based infrastructure segment (108) comprising:
.- N ground-based transmitting stations (NLES#j) respectively associated with N space-based or aeronautical broadcasting means (GEO#j) for transmitting navigation data thereto and respectively numbered by a first integer index j varying from 1 to N; and
.- at least one ground-based station (130) for observing and receiving signals transmitted by at least one satellite of the global navigation satellite system (104) and by the N space-based or aeronautical broadcasting means (GEO#j);
.- a second number K, greater than or equal to 2, of redundant computation centres (CPF#i), respectively numbered by a second index i varying from 1 to K, and configured to compute, from the signals transmitted by the one or more ground-based observation and reception station(s) (130), streams or sequences of NOF i.j navigation messages of augmented navigation frames, with i varying from 1 to K and j varying from 1 to N, ready to be respectively transmitted according to the index j to the N ground-based broadcasting stations (NLES#j);
at least two of the K computation centres (CPF#i) being respectively located on sites that are geographically remote from each other and are connected by a first communications network (140);
the at least one ground-based reception and observation station (130), the N ground-based broadcasting stations (NLES#j) respectively being connected to the K computation centres (CPF#i) by a second communications network (144) and a third communications network (148);
the method for managing streams of navigation messages comprising a first step (304), in which the K computation centres (CPF#i), with i varying from 1 to K, each separately establish a sequence of N parallel streams of NOF i.j navigation messages, with j varying from 1 to N, and the sequence of all the data streams NOF i.j, independently of the computation centre (CPF#i) that establishes them, comprises the same time sequence (MTs) of MTs types of messages independent of the space-based or aeronautical broadcasting means, the MTs types of messages of the sequence being included in a predetermined set {Tm} of types Tm of navigation message contents;
the method for managing streams of navigation messages being **characterised in that**:
the contents of two data streams NOF i.j1, NOF i.j2, which are established at the same time by the same computation centre CPFi, and which are intended for two different space-based or aeronautical broadcasting means (j1 ≠ j2), differ only by the content of messages of a first type relating to ephemeral data of one or more space-based or aeronautical broadcasting means, and/or by the content of messages of a second type relating to the navigation data of a space-based or aeronautical broadcasting means that is more precise than the ephemeral data provided by the messages of the first type.

12. The method for managing streams of navigation messages of a space-based or aeronautical augmentation system (102) as claimed in claim 11, wherein,
for i varying from 1 to K, each i-th computation centre CPFi comprises an i-th radio receiver located on the i-th site associated with the i-th computation centre, and an i-th authorisation unit of the i-th computation centre to transmit the N data streams NOF i.j according to the index j to the N ground-based broadcasting stations NLESj;
the method further comprising:
.- a second step (306), in which each i-th authorisation unit determines, in the current computation phase, a current mode of activity in the augmentation system (102) from among a single master mode and a first-aid mode;
. the master mode authorising the single computation centre CPFm placed in this mode from among the K computation centres to transmit the generated data streams NOF m.j to the N ground-based broadcasting stations NLESj;
. the first-aid mode preventing the computation centre placed in this mode from transmitting its data streams to the ground-based broadcasting stations but authorising said computation centre to switch to master mode in a manner that is coordinated with other computation centres, if necessary, when a persistent failure on the computation centre currently in master mode has been detected;
the mode of activity of the i-th computation centre being determined as a function of:
.* knowledge of the computation centre currently in master mode and transmitting to the broadcasting stations;
.* regular knowledge of the operating states in terms of the absence or the existence of failures in the computation centres of remote sites and of their mode of activity; and
.* the reception quality of the messages transmitted to the broadcasting stations; and
.* the quality of the messages actually transmitted by the space-based or aeronautical broadcasting means and received by the radio receiver corresponding to the authorisation unit; and
.- a third step (308), in which, for i varying from 1 to K, as a function of the determined mode of activity, the i-th authorisation unit remains in the previous mode of activity if the determined mode of activity is identical thereto, or switches to the determined mode of activity if it is different from the previous mode of activity; and
.- a fourth step (310), in which, for i varying from 1 to K, as a function of the determined mode of activity, the i-th authorisation unit allows or prevents the transmission by the i-th computation centre of its data streams to the N ground-based broadcasting stations.

13. The method for managing streams of navigation messages of a space-based or aeronautical augmentation system (102) as claimed in claim 12, wherein the second step (306) of determining the mode of activity comprises fifth, sixth, seventh steps (322, 324, 326), each i-th authorisation unit controlling, in the fifth step (322), the proper reception of return messages sent by the ground-based broadcasting stations (NLES#j) acknowledging receipt of the messages transmitted by the i-th authorisation unit through the third communications network (148); and
each i-th authorisation unit controlling, if necessary, in the sixth step (324), the operating states of the computation centres of the remote sites and their mode of activity through maintenance messages originating from the remote authorisation units; and each i-th authorisation unit controlling, if necessary, in the seventh step (326), the messages actually broadcast by the space-based or aeronautical broadcasting means for confirming or not confirming a lack of repeatability of a failure.
